# EUROPEAN PATENT SPECIFICATION

(11) **EP 4 267 856 B1**
(45) Date of publication and mention of the grant of the patent: **04.02.2026**
(21) Application number: 21840656.9
(22) Date of filing: 23.12.2021
(51) Int. Cl.: F03G 7/06, G02B 7/02, G02B 7/08, G02B 27/64, G03B 3/10, G03B 5/06, G03B 30/00

(54) **ACTUATORS**
AKTUATOREN
ACTIONNEURS

(30) Priority: 27.12.2020 GB 202020643; 30.07.2021 GB 202111021
(43) Date of publication of application: 01.11.2023
(73) Proprietor: Cambridge Mechatronics Limited, Cambridge CB4 0WG (GB)
(72) Inventor: BROWN, Andrew Benjamin Simpson, Cambridge, Cambridgeshire CB4 1YG (GB)
(74) Representative: Cambridge Mechatronics Limited
(86) International application number: PCT/GB2021/053430
(87) International publication number: WO 2022/136885

(56) References cited:
- WO-A1-2019/109733
- WO-A1-2020/074914
- WO-A1-2020/225574

## Description

### Field

This application relates to an actuator, particularly an actuator comprising eight SMA (shape memory alloy) wires that provide positional control of a movable element, and also to methods of fabricating such actuator assemblies.

### Background

WO 2011/104518 A1 describes an SMA actuator that uses SMA wires to move a movable element relative to a support structure, for example to provide autofocus and optical image stabilization. Eight SMA wires are arranged and inclined with respect to a notional primary axis, with a pair of SMA wires on each of four sides around the primary axis. The SMA wires are connected so that on contraction two groups of four SMA wires provide a force with a component in opposite directions along the primary axis, so that the groups are capable of providing movement along the primary axis. There are SMA wires opposing each other that are capable of providing lateral movement or tilting.

Such an actuator assembly may be used, for example, in a camera to move a lens assembly along an optical axis to provide automatic focussing (AF) and perpendicular to the optical axis to provide optical image stabilisation (OIS), or to rotate a camera module to provide OIS.

WO 2019/109733 A describes a method for winding an SMA line on an optical assembly. WO 2020/225574 A describes a method of manufacturing SMA actuators and an apparatus for manufacturing SMA actuators.

### Summary

According to a first aspect of the present invention, there is provided an actuator including a first part, a second part and eight shape memory alloy, SMA, wires connected between the first part and the second part so as to enable the second part to be moved relative to the first part with at least two degrees of freedom. Two of the SMA wires are located on each of four sides. The four sides extend in a loop around a primary axis. On contraction, a first group of four of the SMA wires each provide a force on the second part with a component in a first direction along the primary axis, and a second group of the other four of the SMA wires each provide a force on the second part with a component in a second, opposite direction along the primary axis. Each of the eight SMA wires is configured such that a length component of the wires perpendicular to the primary axis is foreshortened relative to a length of a corresponding one of the four sides.

The second part may alternatively be referred to as the 'moving' part. The first part may alternatively be referred to as the 'static part. The second part may be movable relative to the first part with at least three, at least four, at least five, or with six degrees of freedom. One or more degrees of freedom enabled by the configuration of the eight SMA wires may be restricted by one or more bearings and/or flexures coupling the first part to the second part.

The angle at which an SMA wire connects between the first part and the second part may be configured such that the length of that SMA wire perpendicular to the primary axis is foreshortened relative to the length of a corresponding one of the four sides.

Each of the eight SMA wires is configured such that a resonant frequency for movement of the second part relative to the first part along the primary axis is increased relative to a reference configuration in which the length component of each SMA wire perpendicular to the primary axis were substantially equal to a length of a corresponding side of the first to fourth sides.

Substantially equal may correspond to at least 80%, at least 85% or at least 90% of a corresponding side length. An SMA wire may be configured to increase the resonant frequency by making, compared to the reference configuration, a smaller angle to a direction parallel to the primary axis.

The length of each side of the first to fourth sides may correspond to a respective side of a quadrilateral of maximum area bounded (or encompassed) by the projections of the SMA wires on a plane perpendicular to the primary axis.

Alternatively, the length of each side of the first to fourth sides may correspond to a dimension of the first part parallel to that side. Each of the first to fourth sides may correspond to an edge of the first part, so that the length of each side is equal to the length of the respective edge of the first part.

Alternatively, the length of each side of the first to fourth sides may correspond to a dimension of the actuator parallel to that side. Each of the first to fourth sides may correspond to an edge of the actuator, so that the length of each side is equal to the length of the respective edge of the actuator.

The component of each SMA wire perpendicular to the primary axis may be 85% or less than the length of a respective side.

The length of each side of the first to fourth sides may correspond to a respective side of the quadrilateral of maximum area bounded (or encompassed) by the projections of the SMA wires on a plane perpendicular to the primary axis. The component of each SMA wire perpendicular to the primary axis may be 85% or less, 80% or less, or 75% or less than a dimension of the respective side of the quadrilateral.

The component of each SMA wire perpendicular to the primary axis may be 75% or less, 73% or less, or 70% or less than a dimension of the first part parallel to the respective side. The component of each SMA wire perpendicular to the primary axis may be 90% or less, 85% or less, 83% or less, or 80% or less than a dimension of the second part parallel to the respective side.

The length of each side may be greater than or equal to 14 mm, greater than or equal to 16 mm, greater than or equal to 18 mm, greater than or equal to 20 mm, greater than or equal to 25 mm, or greater than or equal to 30 mm.

Each SMA wire may make an acute angle of greater than or equal to 10 degrees to a plane perpendicular to the primary axis. Each SMA wire may make an acute of greater than or equal to 12 degrees, greater than or equal to 14 degrees, or greater than or equal to 16 degrees to the plane perpendicular to the primary axis.

The SMA wires may be connected to the first and second parts at connection points. The connection points corresponding to first and second sides may be offset towards a first corner joining the first and second sides. The connection points corresponding to third and fourth sides may be offset towards a third corner joining the third and fourth sides.

The connection points may be supported, or provided, by respective connection features. Each connection feature may support, or provide, one or more connection points.

The SMA wires may be connected to the first and second parts at connection points. The connection points corresponding to a first side may be offset towards a first corner joining the first side to a second side. The connection points corresponding to the second side may be offset towards a second corner joining the second side to a third side. The connection points corresponding to the third side may be offset towards a third corner joining the third side to a fourth side. The connection points corresponding to the fourth side may be offset towards a fourth corner joining the fourth side to the first side.

The SMA wires may be connected to the first and second parts at connection points. The connection points corresponding to first and second sides may be offset towards a first corner joining the first and second sides. The connection points corresponding to a third side may be offset towards a third corner joining the third side to a fourth side. The connection points corresponding to the fourth side may be offset towards a fourth corner joining the fourth side to the first side.

The offsetting of the connection points corresponding to at least one side may define a corresponding volume which is within a footprint of the first part. The footprint of the first part may be a projected area of the first part on a plane perpendicular to the primary axis.

The volume may at least partly receive a portion of the first part and/or one or more terminal connections for making electrical connection to the eight SMA wires.

The SMA wires may be connected to the first and second parts at connection points. For each side of the four sides, one set of connection points may be separated by a smaller distance along the primary axis than the other set of connection points on that side, so as to move the crossing point of the respective pair of SMA wires towards the centre of that side.

The crossing points of each pair of SMA wires may be moved towards the centre of each side in a plane perpendicular to the primary axis.

For each side of the four sides, projections of the two corresponding wires onto a plane parallel to that side may intersect at a crossing point. The eight SMA wires may be arranged such that, when the second part is at a neutral position relative to the first part, lines perpendicular to each side and passing through the respective crossing points may substantially intersect a line parallel to the primary axis and coinciding with an intersection of the diagonals of the four sides. The language "substantially intersect" may in this context correspond to a minimum distance between the lines passing through each crossing point being less than or equal to 15%, less than or equal to 10%, or less than or equal to 5% of a length of the respective side perpendicular to the primary axis.

A diagonal of the four sides may correspond to a line joining a pair of corners of the four sides which do not have a side in common. When projected onto a plane perpendicular to the primary axis, the four sides may form a square, a rectangular, a parallelogram, or a kite. When projected onto a plane perpendicular to the primary axis, the four sides may form an irregular quadrilateral.

For each side of the four sides, the set of connection points which is separated by a smaller distance along the primary axis may correspond to the connection points to the second part.

Each of the SMA wires may have a length parallel to the primary axis which is less than or equal to 5 mm. Each of the SMA wires may have a length parallel to the primary axis, which is less than or equal to 4.5 mm, less than or equal to 4 mm, or less than or equal to 3.5 mm.

Each of the SMA wires may have a length parallel to the primary axis which is less than or equal to 1.2 times a height of the first part parallel to the primary axis. Each of the SMA wires may have a length parallel to the primary axis which is less than or equal to 1.1 times or less than or equal to 1.0 times the height of the first part parallel to the primary axis. Each of the SMA wires may have a length parallel to the primary axis which is less than or equal to 1.2 times, less than or equal to 1.1 times, or less than or equal to 1.0 times the height of the second part parallel to the primary axis.

SMA wires may terminate at a point above (relative to the primary axis) a top surface of the first part and/or a top surface of the second part. No more than 30% of the length of each SMA wire parallel to the primary axis may extend above (relative to the primary axis) the top surface of the first part and/or the top surface of the second part.

According to a second aspect not forming part of the invention, there is provided an actuator comprising a first part, a second part, and eight shape memory alloy, SMA, wires connected between the first part and the second part so as to enable the second part to be moved relative to the first part with at least two degrees of freedom. Two of the SMA wires are located on each of first, second third and fourth sides. The four sides extend in a loop around a primary axis. On contraction, a first group of four of the SMA wires each provide a force on the second part with a component in a first direction along the primary axis, and a second group of the other four of the SMA wires each provide a force on the second part with a component in a second, opposite direction along the primary axis. The SMA wires are connected to the first and second parts at connection points. One or more connection points corresponding to the first side are displaced relative to corresponding connection points of a reference actuator, so as to define an additional volume relative to the reference actuator. The connection points corresponding to at least one of the second, third and fourth sides coincide with the corresponding connection points of the reference actuator. In the reference actuator, the relative positioning of the connection points corresponding to the first and third sides substantially correspond, and the relative positioning of the connection points corresponding to the second and fourth sides substantially correspond.

The actuator according to the second aspect may include features corresponding to any features of the actuator according to the first aspect. Definitions applicable to the actuator according to the first aspect may be equally applicable to the actuator according to the second aspect.

A projected area of the additional volume on a plane perpendicular to the primary axis may be at least partly within a projected boundary of the loop on the same plane (or within the quadrilateral defined hereinbefore). A projected area of the additional volume on a plane perpendicular to the primary axis may be at least partly within a projected area of the first part on the same plane. A projected area of the additional volume on a plane perpendicular to the primary axis may be wholly within a projected area of the second part on the same plane.

The additional volume may be defined at least partly between the first part and the SMA wires in a direction parallel to the primary axis.

The SMA wires may be configured such that none of the SMA wires terminates substantially above any other SMA wire relative to the primary axis. The language "substantially above" may refer to no SMA wire terminating above another SMA wire by an amount more than 10% of the longest component parallel to the primary axis amongst the eight SMA wires.

The one or more connection points corresponding to the first side may be offset differently relative to the first side compared to the offsets of equivalent connection points corresponding to at least one of the other sides relative to that other side. Such different relative offset(s) of the one or more connection points corresponding to the first side may define the additional volume, such that a projected area of the volume on a plane perpendicular to the primary axis is at least partly within a projected boundary of the loop on that plane.

The one or more connection points corresponding to the first side may be displaced parallel to the primary axis relative to the reference actuator, such that the additional volume is defined at least partly above or below the two SMA wires corresponding to the first side. All of the connection points corresponding to the first side may be so displaced.

The one or more connection points corresponding to one of the second, third or fourth sides may be displaced parallel to the primary axis relative to the reference actuator, such that a second additional volume is defined at least partly above or below the two SMA wires corresponding to that side.

The one or more connection points corresponding to the first side may be displaced relative to the reference actuator such that the projected boundary of the loop corresponds to an irregular quadrilateral (e.g. the quadrilateral defined hereinbefore). The additional volume may be formed at least partly between the primary axis and one or both of the SMA wires corresponding to the first side.

The one or more connection points corresponding to the first side may be displaced relative to the reference actuator such that the SMA wires corresponding to the first side are not parallel when projected onto a plane perpendicular to the primary axis. The additional volume may be formed at least partly between the primary axis and one of both of the SMA wires corresponding to the first side. In the reference actuator, the SMA wires corresponding to the first side may be parallel when projected onto a plane perpendicular to the primary axis.

One or more terminals for electrical connection to the SMA wires may be received within the additional volume.

One or more connection points corresponding to the first side may be displaced perpendicular to a plane parallel to the primary axis relative to the reference actuator. This plane may correspond to the first side. In particular, this plane may correspond to a plane in which the connection points corresponding to the first side lie in the reference actuator (e.g. the support plane, described below) or to a side of the second part. For example, one or more connection points corresponding to the first side may be closer to or further from this plane relative to the reference actuator. Each of the connection points that are displaced relative to corresponding connection points of a reference actuator may be displaced perpendicular to this plane, either all in the same direction or in different (for example opposite) directions.

According to a third aspect not forming part of the invention, there is provided an actuator comprising a first part, a second part, and eight shape memory alloy wires connected between the first part and the second part so as to enable the second part to be moved relative to the first part with at least two degrees of freedom. Two of the SMA wires are located on each of four sides, the four sides extending in a loop around a primary axis. The two SMA wires on each side include an inner SMA wire and an outer SMA wire. The outer SMA wire is, on average, further from the primary axis than the inner SMA wire. On contraction, a first group of four of the SMA wires each provide a force on the second part with a component in a first direction along the primary axis, and a second group of the other four of the SMA wires each provide a force on the second part with a component in a second, opposite direction along the primary axis. Moving clockwise about the loop and viewing each side along a radial direction perpendicular to the primary axis and that side, the corresponding two SMA wires adopt either:
- a first wire configuration in which the inner SMA wire slopes upwards in a direction tangential to the loop whilst the outer SMA wire slopes downwards, or
- a second wire configuration in which the inner SMA wire slopes downwards in the direction tangential to the loop whilst the outer SMA wire slopes upwards.

In this context, the term 'upwards' denotes a component in the positive direction relative to the primary axis, and the term 'downwards' denotes a component in the negative direction relative to the primary axis. Each side has the same configuration of the first and second wire configurations as at least one adjacent side.

The actuator according to the third aspect may include features corresponding to any features of the actuators according to the first and/or second aspects. Definitions applicable to the actuators according to the first and/or second aspects may be equally applicable to the actuator according to the third aspect.

The first and second wire configurations may be defined relative to a cylindrical coordinate system having a radius, p, away from the primary axis, a height z along the primary axis and an angle, θ, about the primary axis. Let θ = *θ₂* correspond to a radial line substantially perpendicular to a first side of the four sides. The language "substantially perpendicular" may mean perpendicular to a line corresponding to an averaged position of the two SMA wires corresponding to the first side when projected onto a *ρ*-*θ* plane. Second, third and fourth angles *θ*₂ *< θ₃ < θ*₄ (with *θ₁* < θ₂ < *θ₃* < *θ₄*) may correspond to radial lines substantially perpendicular to the respective second, third and fourth sides of the four sides. For each side, the first wire configuration may correspond to the inner SMA wire sloping upwards in a direction parallel to a tangent along the positive angular *θ* direction whilst the outer SMA wire slopes downwards, with 'upwards' and 'downwards' being relative to the height z parallel to the primary axis z. For each side, the second wire configuration may correspond to the inner SMA wire sloping downwards in a direction parallel to a tangent along the positive angular *θ* direction whilst the outer SMA wire slopes upwards, with upwards and downwards being relative to the height z parallel to the primary axis z.

All of the sides may correspond to the first wire configuration. Alternatively, all of the sides correspond to the second wire configuration.

Moving about the loop, first and second sides of the four sides may correspond to the first wire configuration and third and fourth side of the four sides may correspond to the second wire configuration.

Each SMA wires may be attached at either end to respective connection features. At least one connection feature may be common to a pair of SMA wires which correspond to adjacent sides of the four sides, and the connection feature may be folded about a corner between the adjacent sides.

One, some, or all of the connection features may be formed from metal, for example steel. A connection feature which is common to a pair of SMA wires may be connected to system ground or common mode, whilst the other ends of the pair of SMA wires are connected to independent current or voltage controlled sources. In this way, the currents along each of the pair of SMA wires connected to a common connection feature may be independently controlled even when the connection feature is conductive.

SMA wires may be attached to connection features by crimping, welding, or in any other suitable way. In addition to mechanical attachment, the attachment mechanism may also provide electrical connection to the SMA wires.

A camera may include an actuator according any one of the first, second or third aspects. The camera may also include an image sensor. The camera may also include a lens attached to the second part.

The image sensor may be attached to the first part, directly or indirectly. For example, the image sensor and the first part may both be attached to a common base. A screening can (or 'box' or 'case') may be provided to surround the actuator and the image sensor. The lens(es) used to form an image on the image sensor may protrude at least partly above the screening can (relative to the positive direction along the primary axis).

According to a fourth aspect of the invention, there is provided use of an actuator according to any one of the first, second or third aspects to provide an autofocus function and/or an optical image stabilisation function.

According to a fifth aspect not forming part of the invention, there is provided a method of fabricating an actuator. The method includes providing a frame supporting a plurality of first and second connection features arranged in a pattern along a first line, and a plurality of third and fourth connection features arranged in a pattern along a second line parallel to the first line. The method also includes attaching a first length of shape memory alloy, SMA, wire to each of the first and fourth connection features, such that the first and fourth connection features alternate along the first length of SMA wire. The method also includes attaching a second length of SMA wire to each of the second and third connection features such that the third and second connection features alternate along the second length of SMA wire. The method also includes cutting the frame to form a plurality of coupons. Each coupon supports at least one each of the first to fourth connection features. The method also includes assembling the actuator by connecting each of the connection features corresponding to two or more of the coupons to a first part or a second part, such that the actuator assembly comprises eight SMA wires. The two or more coupons were sequential within the frame. Each SMA wire is connected between the first part and the second part, so as to enable the second part to be moved relative to the first part with at least two degrees of freedom. Four of the eight SMA wires are formed from the first length of SMA wire, and the remaining four of the eight SMA wires are formed from the second length of SMA wire. Two of the SMA wires are located on each of four sides, the four sides extending in a loop around a primary axis. On contraction, a first group of four of the SMA wires each provide a force on the second part with a component in a first direction along the primary axis, and a second group of the other four of the SMA wires each provide a force on the second part with a component in a second, opposite direction along the primary axis.

The method of fabrication and/or the resulting actuator may include features corresponding to any features of the actuators according to the first, second and/or third aspects. Definitions applicable to the actuators according to the first, second and/or third aspects may be equally applicable to the method of fabrication /or the resulting actuator.

The first length of SMA wire may be attached to the first and fourth connection features by crimping, welding, or in any other suitable way. The first length of SMA wire may be severed at one or more points to form the corresponding four of the eight SMA wires. The second length of SMA wire may be attached to the second and third connection features by crimping, welding, or in any other suitable way. The second length of SMA wire may be severed at one or more points to form the corresponding four of the eight SMA wires.

Each connection feature may include a pair of first and second sub-features. A coupon may include a first sub-feature from one connection feature and a second sub-feature from a different connection feature, in order to include a complete connection feature overall.

Each coupon may include a support portion and at least one each of the first to fourth connection features. Assembling the actuator may include detaching the support portion after connecting each of the crimp features to the first part or the second part.

The first length of SMA wire may be attached to the first and fourth connection features before the second length of SMA wire is attached to the second and third connection features. The first length of SMA wire may be attached to the first and fourth connection features concurrently with attaching the second length of SMA wire to the second and third connection features. For example, the first length of SMA wire may be crimped to a first crimp feature, following by crimping the second length of SMA wire to a second feature, followed by crimping the first length of SMA wire to a fourth crimp feature, followed by crimping the second length of SMA wire to a third crimp features, and so forth.

Assembling the actuator may include connecting each of the connection features corresponding to first and second coupons to the first part or the second part. The first coupon may be folded to conform to first and second sides of the four sides before connection of the supported connection features to the first and second parts. The second coupon may be folded to conform to third and fourth sides of the four sides before connection of the supported connection features to the first and second parts.

At least one of the first to fourth connection features may be configured to be foldable after attachment to the first or second length of SMA wire.

Assembling the actuator may include connecting each of the connection features corresponding to first to fourth coupons to the first part or the second part.

Each of the first to fourth coupons may corresponds to one of the four sides.

The frame may be cut to form the plurality of coupons and one or more unused portions which are not used for assembling an actuator.

According to a sixth aspect not forming part of the invention, there is provided an actuator fabricated using the method of fabricating an actuator according to the fifth aspect.

According to a seventh aspect not forming part of the invention, there is provide an actuator including a first part, a second part, and eight shape memory alloy, SMA, wires connected between the first part and the second part so as to enable the second part to be moved relative to the first part with at least two degrees of freedom. Each SMA wire is attached at either end to connection features. Two of the SMA wires are located on each of four sides, the four sides extending in a loop around a primary axis. On contraction, a first group of four of the SMA wires each provide a force on the second part with a component in a first direction along the primary axis, and a second group of the other four of the SMA wires each provide a force on the second part with a component in a second, opposite direction along the primary axis. At least one connection feature is common to a pair of SMA wires which correspond to adjacent sides of the four sides, and that connection feature is folded about a corner between the adjacent sides.

According to an eighth aspect not forming part of the invention there is provided an actuator comprising a first part, a second part and eight shape memory alloy, SMA, wires connected between the first part and the second part so as to enable the second part to be moved relative to the first part with at least two degrees of freedom. Each SMA wire is attached at either end to connection features. Two of the SMA wires are located on each of four sides, the four sides extending in a loop around a primary axis. On contraction, a first group of four of the SMA wires each provide a force on the second part with a component in a first direction along the primary axis, and a second group of the other four of the SMA wires each provide a force on the second part with a component in a second, opposite direction along the primary axis. The SMA wires are connected to the first and second parts at connection points. One or more connection points corresponding to the first side are displaced relative to corresponding connection points of a reference actuator such that an angle between a first SMA wire on the first side and a plane perpendicular to the primary axis is different from an angle between a second SMA wire on the first side and the plane perpendicular to the primary axis. The connection points corresponding to at least one of the second, third and fourth sides coincide with the corresponding connection points of the reference actuator. In the reference actuator, the relative positioning of the connection points corresponding to the first and third sides substantially correspond, and the relative positioning of the connection points corresponding to the second and fourth sides substantially correspond.

The actuator according to the seventh or eighth aspect may include features corresponding to any features of the actuators according to the first, second, third and/or sixth aspects, or the method according to the fifth aspect.

Definitions applicable to the actuators according to the first, second, third and/or sixth aspects, or the method according to the fifth aspect, may be equally applicable to the actuator according to the seventh aspect.

### Brief Description of the Drawings

Certain embodiments of the present invention will now be described, by way of example only, with reference to the accompanying drawings, in which:
Figures 1A to 1E schematically illustrate a known actuator;
Figure 2 schematically illustrates a camera module incorporating the known actuator;
Figures 3A to 3E schematically illustrate a first modified actuator;
Figure 4A to 4C schematically illustrate a preferred definition of the side lengths of an actuator;
Figures 5A to 5E schematically illustrate a second modified actuator;
Figures 6A and 6B schematically illustrate wire-crossing points of the first modified actuator shown in Figures 3A to 3EI
Figures 7A and 7B schematically illustrate wire-crossing points of a third modified actuator;
Figures 8A to 8E schematically illustrate a fourth modified actuator;
Figures 9A to 9E schematically illustrate a fifth modified actuator;
Figures 10A to 10E schematically illustrate a sixth modified actuator;
Figures 11A to 11E schematically illustrate a seventh modified actuator;
Figures 12A and 12B schematically illustrate an improved method for forming coupons supporting connection features, for use in assembling actuators;
Figures 13A to 13E schematically illustrate an eighth modified actuator;
Figures 14A and 14B schematically illustrate an improved method for forming coupons supporting connection features, for use in assembling a ninth modified actuator shown in Figure 15;
Figures 15A to 15E schematically illustrate the ninth modified actuator; and
Figure 16 schematically shows a further possible wire configuration.

### Detailed Description

In the following, like parts are denoted by like reference numerals.

### Known SMA actuator

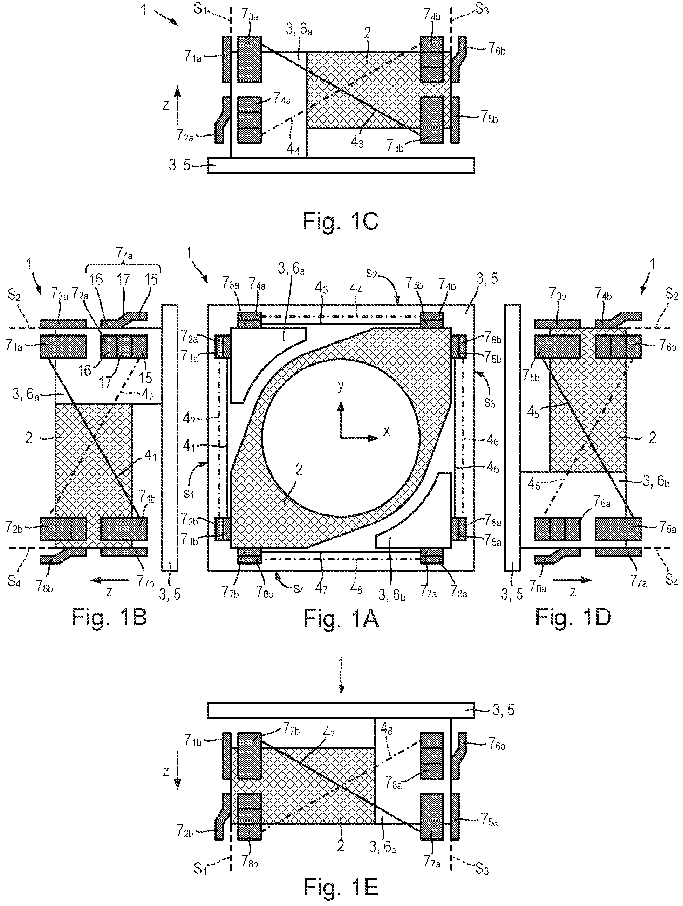

Referring to Figures 1A to 1E, a known SMA actuator 1 (also referred to simply as the known actuator) will now be described.

Figure 1A is a plan view, and a set of right-handed orthogonal Cartesian axes is drawn in Figure 1A for reference purposes. Figures 1B through 1E represent views which would be observed when observing the known actuator 1 from above (along the negative z direction) via a mirror oriented at an angle of 45 degrees to the primary axis x (thus the axes become left-handed in Figures 1B through 1E). For example, Figure 1B shows known actuator 1 of Figure 1A, reflected through a mirror plane parallel to the y-axis and angled at 45 degrees to the x-axis and primary axis z, the mirror plane positioned to the left of Figure 1A. This style of projection is selected, and Figures 1B through 1E are scaled and positioned relative to Figure 1A to permit convenient mapping of features between Figure 1A and each of Figures 1B through 1E. In the interests of visual clarity, only features from the "nearer" half of the actuator 1 (to the mirror plane) are shown in Figures 1B through 1E.

The known actuator 1 includes a moving part 2 (also referred to as a 'moveable element' or 'second part') supported on a static part 3 (also referred to as a 'support structure' or 'first part') by eight SMA wires 4₁, ..., 4₈.

The moving part 2 may in general be any type of element. As viewed along a primary axis z, the moving part 2 has the shape of a square with two diagonally-opposite corners that are rounded. However, more generally, the moving part 2 could have any shape. The static part 3 has a square base 5 with two parts 6ₐ, 6_{b} (also referred to as support posts) that extend from this base 5 into the space left by the rounded corners of the moving part 2. However, in general, the static part 3 could be any type of element suitable for supporting the moving part 2. The static part 3 supports the moving part 2 in a manner allowing movement of the moving part 2 relative to the static part 3. In this example, the moving part 2 is supported on the static part 3 solely by the SMA wires 4₁, ..., 4₈, but the known actuator 1 may comprise a suspension system (for example including one or more bearings and/or flexures) additionally supporting the moving part 2 on the static part 3.

Each SMA wire 4 comprises a piece of SMA wire connected at each end via a connection feature 7 to a respective one of the moving part 2 and the static part 3. Herein, a connection feature 7ₙₐ connects the *n*^{th} of 1 ≤ *n* ≤ 8 SMA wires 4₁, ..., 4₈ to the static part 3, a connection feature 7_{nb} connects the n^{th} SMA wire 4ₙ to the moving part 2, and a connection feature in general (or the connection features collectively) shall be referred to as connection feature(s) 7.

As will be described in more detail below, the connection features 7 in the illustrated examples are crimp portions (and will be generally referred to as such). However, more generally, any suitable means that provides mechanical connection may be used to provide connection features 7. In addition, electrical connections are made to the SMA wires 4₁, ..., 4₈, for example via the crimp portions 7, so that a current in each of the eight SMA wires 4₁, ..., 4₈ may be controlled independently of each other SMA wire 4₁, ..., 4₈.

Each SMA wire 4₁, ..., 4₈ extends along a corresponding side *s₁, s₂, s₃, s₄* of the known actuator 1. In the example illustrated in Figure 1A, moving clockwise about the primary axis z, the first and second SMA wires 4₁, 4₂ extend along the first side *s₁*, the third and fourth SMA wires 4₃, 4₄ extend along the second side *s₂,* the fifth and sixth SMA wires 4₅, 4₆ extend along the third side s₃, and the seventh and eighth SMA wires 4₇, 4₈ extend along the fourth side s₄. Each SMA wire 4₁, ..., 4₈ is held in tension, thereby applying a component of force in a direction along the primary axis z and a component of force in a lateral direction perpendicular to the primary axis z.

SMA material has the property that on heating it undergoes a solid-state phase change which causes the SMA material to contract. At low temperatures, the SMA material enters the Martensite phase. At high temperatures the SMA enters the Austenite phase which induces a deformation causing the SMA material to contract. The phase change occurs over a range of temperature due to the statistical spread of transition temperature in the SMA crystal structure. Thus heating of the SMA wires 4₁, ..., 4₈ causes them to decrease in length. The SMA wires 4₁, ..., 4₈ may be made of any suitable SMA material, for example Nitinol or another titanium-alloy SMA material. Advantageously, the material composition and pre-treatment of the SMA wires 4₁, ..., 4₈ is chosen to provide phase change over a range of temperature that is above the expected ambient temperature during normal operation and as wide as possible to maximise the degree of positional control.

On heating of one of the SMA wires 4₁, ..., 4₈, the stress therein increases and it contracts. This causes movement of the moving part 2 (second part). A range of movement occurs as the temperature of the SMA increases over the range of temperature in which there occurs the transition of the SMA material from the Martensite phase to the Austenite phase. Conversely, on cooling of one of the SMA wires 4₁, ..., 4₈ so that the stress therein decreases, and it expands under the force from opposing ones of the SMA wires 4₁, ..., 4₈. This allows the moving part 2 to move in the opposite direction.

The position of the moving part 2 relative to the static part along the primary axis z is controlled by varying the temperature of the SMA wires 4₁, ..., 4₈. This is achieved by passing through each of SMA wires 4₁, ..., 4₈ a drive current that provides resistive heating. Heating is provided directly by the drive current. Cooling is provided by reducing or ceasing the drive current to allow the SMA wires 4₁, ..., 4₈ and/or the moving part 2 to cool by conduction to the surroundings.

Two of the SMA wires 4₁, ..., 4₈ are arranged on each of the four sides *s₁*, *s₂,* s₃, *s₄* around the primary axis z. The two of the SMA wires 4₁, ..., 4₈ on each side *s₁*, ..., s₄, for example SMA wires 4₅ and 4₆ on the third side s₃, are inclined in opposite senses with respect to each other, as viewed perpendicular from the primary axis z, and cross each other (clearly seen Figure 1D, and similar wire crossings may be observed in Figures 1B, 1C and 1E). The four sides *s₁*, *s₂, s₃, s₄* on which the SMA wires 4₁, ..., 4₈ are arranged extend in a loop around the primary axis *z.* In this example, the sides *s₁*, *s₂, s₃*, *s₄* are perpendicular and so form a square as viewed along the primary axis z, but alternatively the sides *s₂, s₂, sₛ, s₄* could take a different e.g. quadrilateral shape. In this example, the SMA wires 4₁, ..., 4₈ are parallel to the outer faces of the square envelope of the moving part 2 which conveniently packages the known actuator 1, but this is not essential.

One of the SMA wires *4₁,* ..., *4₈ o*n each side *s₁*, ..., *s₄* provides a force on the moving part 2 in the same direction along the primary axis *z.* In particular, the SMA wires 4₁, 4₃, 4₅, 4₇ form a 'first' group (drawn with solid lines in Figure 1) that provide a force in one direction ('upwards') and the other SMA wires 4₂, 4₄, 4₆, 4₈ form a 'second' group (drawn with chained lines in Figure 1) that provide a force in the opposite direction ('downwards'). Herein, 'up' and 'down' generally refer to opposite directions along the primary axis z, wherein movement of the moving part 2 away from the base 5 of the static part 3 is 'up'.

The SMA wires 4₁, ..., 4₈ have an arrangement in which lengths and inclination angles are the same. The configuration of the first and second SMA wires 4₁, 4₂ relative to the first side *s₁* is equivalent to the configuration of the fifth and sixth SMA wires 4₅, 4₆ relative to the third side *s₃.* Similarly, the configuration of the third and fourth SMA wires 4₃, 4₄ relative to the second side *s₂* is equivalent to the configuration of the seventh and eights SMA wires 4₇, 4₈ relative to the fourth side s₄.

As a result of this arrangement of SMA wires 4₁, ..., 4₈, different combinations of the SMA wires 4₁, ..., 4₈, when selectively actuated are capable of driving movement of the moving part 2 (second part) with multiple degrees of freedom relative to the static part 3 (first part), as follows.

The first group of SMA wires 4₁, 4₃, 4₅, 4₇ and the second group of SMA wires 4₂, 4₄, 4₆, 4₈ when commonly actuated drive movement in different directions along the primary axis z.

Within each group, adjacent pairs of the SMA wires (for example on one hand SMA wires 4₁, 4₇ and on the other hand SMA wires 4₃, 4₅) when differentially actuated drive tilting about a lateral axis perpendicular to the primary axis z. Tilting in any arbitrary direction may be achieved as a linear combination of tilts about the two lateral axes.

Sets of four SMA wires, including two SMA wires from each group, (for example on one hand SMA wires 4₁, 4₂, 4₃, 4₄ and on the other hand SMA wires 4₅, 4₆, 4₇, 4₈) when commonly actuated drive movement along a lateral axis (e.g. the line *y=-x)* perpendicular to the primary axis z. Movement in any arbitrary direction perpendicular to the primary axis z may be achieved as a linear combination of movements along the two lateral axes (e.g. *y=x* and *y=-x*).

A control circuit can be electrically connected to the SMA wires 4₁, ..., 4₈ for supplying drive currents thereto to drive these movements, e.g. as described in WO 2011/104518 A1 (which is incorporated by reference to the maximum extent permissible by law).

### Use in a camera module

Although the known actuator 1 may be used to provide positional control of a wide range of types of movable elements (moving parts 2), a non-limitative example in which the known actuator 1 is used in a miniaturised camera.

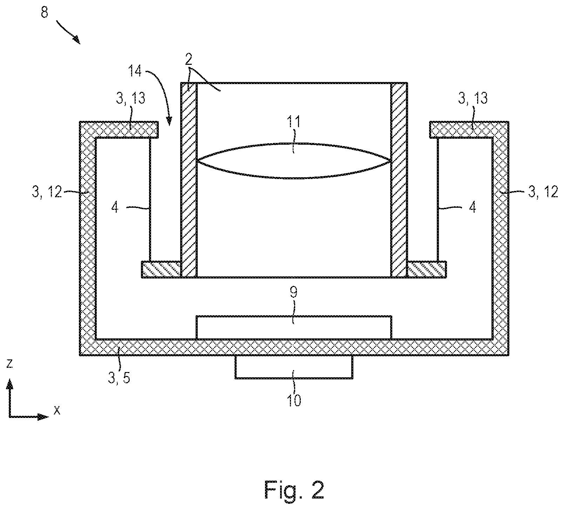

Referring also to Figure 2, a camera module 8 incorporating the known actuator 1 is shown.

In this example, the known actuator 1 is used in a camera module 8 arranged to perform autofocus (AF) and optical image stabilisation (OIS). The camera module 8 is to be incorporated in a portable electronic device such as a mobile telephone. Thus, miniaturisation is an important design criterion.

The static part 3 (first part) takes the form of a camera support supporting an image sensor 9 on the base 5. The reverse side of the base 5 (to the image sensor 9) supports an IC (integrated circuit) chip 10 in which a control circuit for the actuator 1 is implemented. The moving part 2 (second part) takes the form of a lens carriage supporting one or more camera lens elements 11 arranged to focus an image onto the image sensor 9. The image sensor 9 captures the image and may be of any suitable type for example a CCD (charge-coupled device) or a CMOS (complementary metal-oxide-semiconductor) device. The camera module 8 is a miniature (or 'compact') camera module in which the camera lens element 11 has one or more lenses with a diameter of e.g. at most 12 mm. The static part 3 of the camera module 8 also includes an upstanding wall 12 ("up" relative to the primary axis z) extending around the perimeter of the base 5. The upper end of the wall 12 connects to a top plate 13 which is parallel to the base 5, and which includes an aperture 14 for image forming by the camera lens element(s) 11. In the example shown, the moving part 2 protrudes through the aperture 14 to a point above the top plate 13 (relative to the primary axis z), although in other examples the moving part 2 may only extend above the static part 3 for a portion of a range of motion of the known actuator 1, or not at all.

In this example, OIS is provided by moving the camera lens element 11 laterally relative to the primary axis z, which is parallel to the optical axis of the camera lens element 11 (and may be collinear with the optical axis when the camera lens element 11 is in a central position). In addition, the camera lens element 11 may be moved along the primary axis z to provide AF. Thus, the AF and OIS functions are combined in the known actuator 1.

The control circuit implemented using the IC chip 10 may be configured as described in WO 2011/104518 A1 in order to provide this functionality.

Referring again to Figures 1A to 1E, the arrangement of SMA wires 4₁, ..., 4₈ and the configuration of the connection features 7 in the known actuator 1 will now be described further.

On each side *s* (e.g. the first side *s₁* illustrated in Fig. 1B), there are two SMA wires 4 (e.g. wires 4₁, 4₂) that cross e.g. when viewed along a direction to normal to that side *s*.

The pair of SMA wires 4 on each side s are connected to the moving part 2 via respective connection features 7_{1b}, ..., 7_{8b} (also referred to as moving connection features) and are connected to one of the support posts 6a, 6b via a respective connection feature 7₁ₐ, ..., 7₈ₐ (also referred to as a static connection features). In this example, each connection feature 7 takes the form of a crimp feature, to which an end of a SMA wire 4₁, ..., 4₈ is crimped. For example, the connection features 7 may be formed from sheet metal, and each may include a portion (for example an end) bent back on itself to form a space for receiving an SMA wire 4₁, ..., 4₈ prior to securement by crimping.

Each connection (crimp) feature 7 includes a wire connection point 15 (or simply "connection point") which is connected to a support portion 16 by an intermediate portion 17. Although only explicitly labelled for the connection features 7₂ₐ and 7₄ₐ, all of the connection features 7 include a connection point 15 connected to a support portion 16 by an intermediate portion 17. The support portion of each connection (crimp) feature 7 is attached (in any suitable way) to the moving part 2 or to a support post 6ₐ, 6_{b} of the static part 3. In this example, the connection points 15 of each connection feature 7 take the form of crimp connections.

Although illustrated as separate, it is possible for the support portions 16 of the static connection features 7ₙₐ to be interconnected, or for the support portions 16 of the moving connection features 7_{nb} to be interconnected (although not both at once). For example, on the first side *s₁*, the support portions 16 of connection features 7_{1b} and 7_{2b} may be interconnected (or integrally formed). Drive currents for the first and second SMA wires 4₁, 4₂ may still be independently varied by using the interconnected connection features 7_{1b} and 7_{2b} as a common return. In this way, the number of electrical connections required to be made to the moving part 2 may be reduced.

On each side *s₁*, *...s₄,* the support portions 16 are each generally planar and lie in the same plane *S₂, S₂, S₃, S₄,* referred to as the "support plane" for the respective side *s₁*, *..., s₄.* Each support plane *S₂,* ..., *S₄* is parallel to the primary axis z. The same applies to the regions of the moving part 2 and the support posts 6ₐ, 6_{b} of the static part 3 to which the support portions 16 of the connection features 7 are attached.

The connection points 15, intermediate portions 17 and support portions 16 are integrally formed, e.g. from sheet metal. In this example, the connection points 15 in the form of crimp connections are formed by folding the sheet metal back over itself, followed by crimping when the respective SMA wire 4₁, ..., 4₈ is between the folded portions.

The pair of SMA wires 4₁, ..., 4₈ on each side *s₁*, ..., *s₄* include an 'inner' SMA wire 4₁, 4₃, 4₅, 4₇ and an 'outer' wire 4₂, 4₄, 4₆, 4₈ that is, on average, further from the primary axis *z* than the inner wires 4₁, 4₃, 4₅, 4₇. The inner wires 4₁, 4₃, 4₅, 4₇ are located on first planes that correspond to, or are parallel to, the support planes S₁, ..., S₄ of the respective sides *s₁*, ..., *s₄,* and the outer wires 4₂, 4₄, 4₆, 4₈ are located on second planes that are parallel to the respective first planes and are further from the primary axis z than the first planes.

In the illustrated example, the inner wires 4₁, 4₃, 4₅, 4₇ are the same as the first group of SMA wires 4₁, 4₃, 4₅, 4₇ which when commonly actuated move the moving part 2 away from the base 5 along the primary axis z. Similarly, the outer wires 4₂, 4₄, 4₆, 4₈ are the same as the second group of SMA wires 4₂, 4₄, 4₆, 4₈ when which when commonly actuated move the moving part 2 towards the base 5 along the primary axis z. In an alternative configuration of the known actuator 1, the first group of SMA wires 4₁, 4₃, 4₅, 4₇ may be configured as the outer wires whilst the second group of SMA wires 4₂, 4₄, 4₆, 4₈ are configured as the inner wires.

Accordingly, on each side *s₁*, ..., *s₄,* the connection points 15 for the outer wires 4₂, 4₄, 4₆, 4₈ are offset from the respective support planes *S₁, ..., S₄* in a direction away from the primary axis z. This may be achieved by angling the relevant intermediate portions 17, e.g. with a fold between the support portion 16 and the intermediate portion 17 and an opposite fold between the intermediate portion 17 and the connection point 15, so that the connection point 15 is substantially parallel to the support portion 16. For example, see the side views of connection points 7₄ₐ and 7_{8b} in Figure 1B, connection points 7₂ₐ and 7_{6b} in Figure 1C, connection points 7_{4b} and 7₈ₐ in Figure 1D and connection points 7₆ₐ and 7_{2b} in Figure 1E.

The connection points 15 for the inner wires 4₁, 4₃, 4₅, 4₇ may be similarly offset from the support portions 16, albeit to a lesser degree, or they may lie in substantially the same plane as the support portions 16.

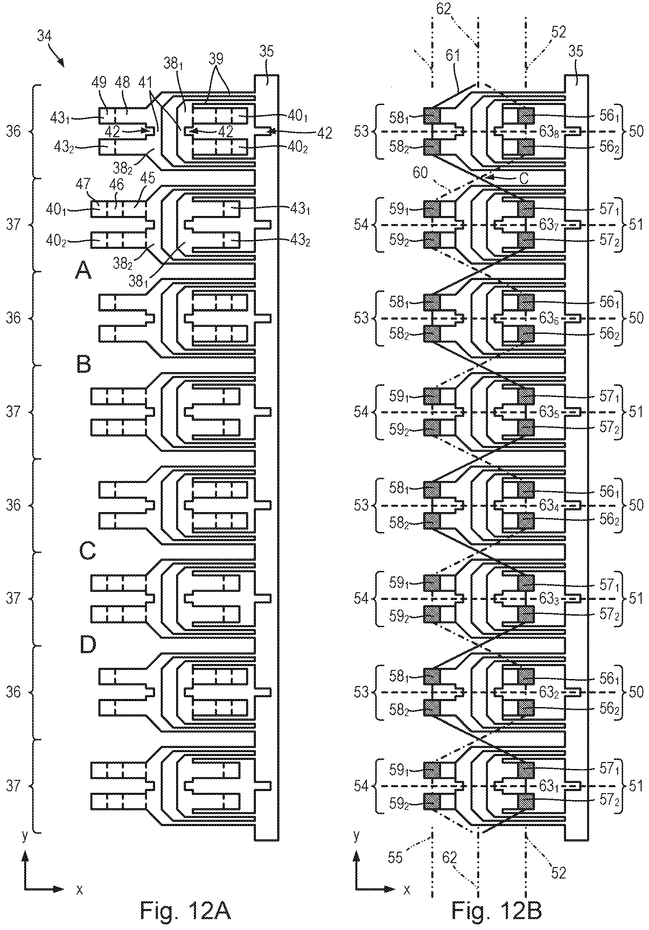

All of the connection features 7 for a side *s₁*, *..., s₄* may be provided as a single component or coupon (see discussion of Figures 12 to 15 hereinafter) for attachment to that side *s₁*, *..., s₄.* For example, the connection features 7₁ₐ, 7_{1b}, 7₂ₐ, 7_{2b} for the first side *s₁* may be formed by etching a metal sheet, leaving each of the connection features 7₁ₐ, 7_{1b}, 7₂ₐ, 7_{2b} connected to a support structure (for example support 35 in Figure 12) by one or more sprues/connection members (for example sprues 39 in Figure 12). The connection features 7₂ₐ, 7_{2b} which will provide offsetting of the outer SMA wire 4₂ from the support plane S₁ are bent/folded to shape prior to attachment of the coupon to the static and moving parts 3, 2. Preferably the SMA wires 4₁, 4₂ are connected between the connection features 7₁ₐ, 7_{1b}, 7₂ₐ, 7_{2b} (for example by crimping) whilst these are still connected to the support structure (for example support 35 in Figure 12). The coupon is connected to the side *s₁* by attaching the support portions 16 of the static connection features 7₁ₐ, 7_{2b} to the post 6ₐ of the static part 3, and attaching the support portions 16 of the moving connection features 7_{1b}, 7_{2b} to the moving part 2. The connection features 7₁ₐ, 7_{1b}, 7₂ₐ, 7_{2b} may then be detached from the support structure (for example support 35 in Figure 12).

The configuration of the connection features 7₁ₐ, 7_{1b}, 7₂ₐ, 7_{2b} relative to the first side *s₁* is equivalent to the configuration of the connection features 7₅ₐ, 7_{5b}, 7₆ₐ, 7_{6b} relative to the third side s₃. Consequently, identical coupons may be connected to the first and third sides *s₁*, *s₃* to provide the corresponding connection features 7.

Similarly, the configuration of the connection features 7₃ₐ, 7_{3b}, 7₄ₐ, 7_{5b} relative to the second side *s₂* is equivalent to the configuration of the connection features 7₇ₐ, 7_{7b}, 7₈ₐ, 7_{8b} relative to the fourth side s₄. However, whilst identical coupons may be connected to the second and fourth sides *s₂, s₄* to provide the corresponding connection features 7, they cannot be identical to those for the first and third sides *s₁*, *s₃*, since the two configurations of connection features 7 are mirror images of each other and hence cannot be brought into coincidence with one another by rotations or translations.

The present specification concerns improvements in the design of SMA actuators 1, and similar actuators such as, for example, actuator configurations described in WO 2011/104518 A1. See in particular Figures 1 to 5, 11 to 20 of WO 2011/104518 A1, and the corresponding passages of description.

### Reduced z-height actuators

One or more miniature cameras are typically included in devices such as smart phones, tablet computers, smart watches, laptop computers and the like. There is a desire to make such devices as thin as possible, both in order to make them lighter and easier to hold for a user and also as a result of aesthetic considerations. This leads to a corresponding requirement to reduce the thickness of miniature camera modules 8, including components such as SMA actuators 1 which provide AF and/or OIS functions to such camera modules 8.

However, it is not so simple as merely reducing the distance between connection points 15 of connection features 7 features parallel to the primary axis *z* (for example the distance between connection features 7₁ₐ and 7₂ₐ parallel to the primary axis *z*). Such simple adjustments will permit reducing the thickness of an actuator along the primary axis z, but at the cost of reducing the angle made between the SMA wires 4₁, ..., 4₈ and a plane perpendicular to the primary axis z. A reduction in SMA wire 4₁, ..., 4₈ angle decreases the resonant frequency for motions of the moving part 2 (second part) along the primary axis, adversely affecting the controllability of the moving part 2 for motions along the primary axis *z.*

In general, design rules for SMA actuators hold that the length of SMA wires 4₁, ..., 4₈ should be as long as the space allows, since the longer the natural length of the SMA wire 4₁, ..., 4₈, the larger the potential length change from phase transitions. Consequently, in known actuators 1 the SMA wires 4₁, ..., 4₈ extend substantially along the length of the corresponding sides *s₁*, *..., s₄.* Combined with the hereinbefore outlined considerations of resonant frequency for movements along the primary axis z, the minimum height/thickness of an actuator 1 along the primary axis z is conventionally determined by the desired side *s₁*, *..., s₄* length (e.g. by the diameter of an objective lens 11).

However, the inventors of the present specification have realised that this conventional restriction may be broken without compromising performance of an SMA actuator. In particular, the height/thickness along the primary axis z may be reduced whilst maintaining the SMA wire 4₁, ..., 4₈ angles by reducing the SMA wire 4₁, ..., 4₈ lengths so that the SMA wires 4₁, ..., 4₈ do not extend along the whole length of each side *s₁*, *..., s₄*. In other words the SMA wires 4₁, ..., 4₈ are foreshortened relative to the sides *s₁*, ..., *s₄* (and the known actuator 1).

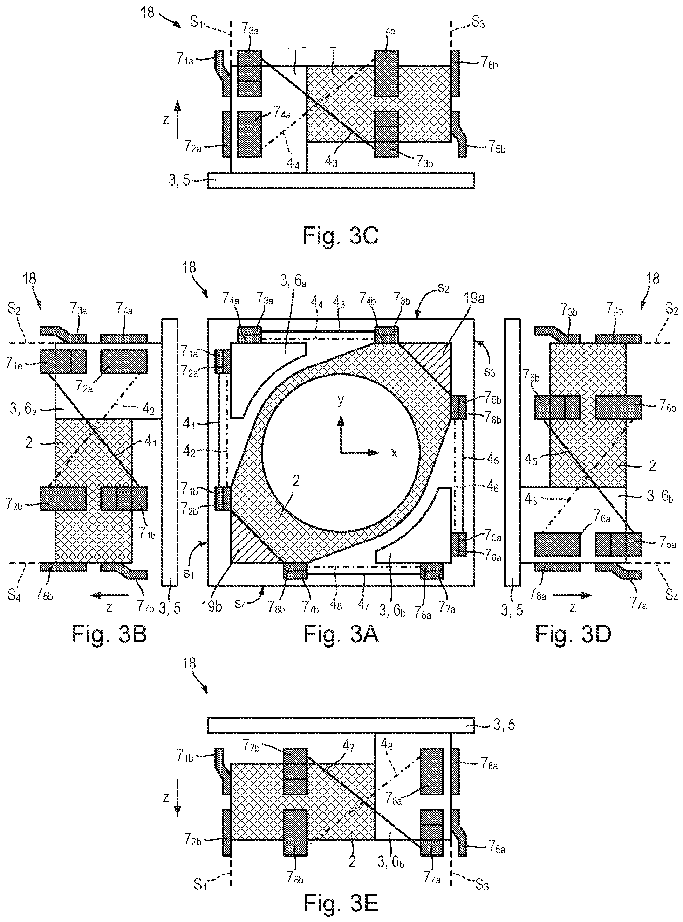

Referring also to Figures 3A to 3E, a first modified actuator 18 (hereinafter "first actuator") is shown.

Figures 3B to 3E have the same geometric relationships to Figure 3A as Figures 1B to 1E to Figure 1A.

The first actuator 18 is the same as the known actuator 1 (in the alternative configuration with the first group of SMA wires 4₁, 4₃, 4₅, 4₇ configured as the outer wires), except that each of the eight SMA wires 4₁, ..., 4₈ has an overall length and is angled such that a length of each SMA wire 4₁, ..., 4₈ perpendicular to the primary axis z is foreshortened relative to a length of a corresponding side *s₁*, ..., *s₄* of the first to fourth sides *s₁*, *..., s₄*. In other words, a length of each SMA wire 4₁, ..., 4₈ perpendicular to the primary axis z is foreshortened relative to a length of the corresponding SMA wire 4₁, ..., 4₈ of the known actuator 1.

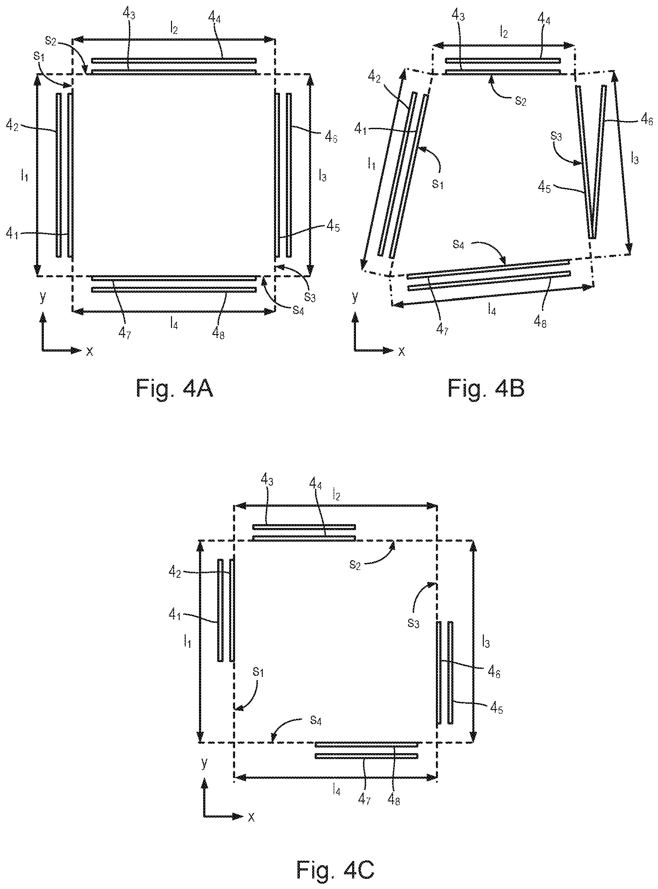

Referring also to Figure 4A, a preferred definition of side *s₁*, *s₂,* s₃, *s₄* lengths is illustrated.

Figure 4A shows a projection of the onto a plane perpendicular to the primary axis z (i.e. an *x-y* plane). Denoting the length of the first side *s₁* as *l₁*, the length of the second side *s₂* as *l₂*, and so forth, the length *l₁*, ..., *l₄* of each side *s₁*, *..., s₄* may correspond to a respective side length of a quadrilateral of maximum area and bounded (or 'encompassed') by the projections of the SMA wires 4₁, ..., 4₈ on the plane. The quadrilateral is of maximum area in the sense of being the largest quadrilateral which does not extend at any point beyond the projection of the SMA wires 4₁, ..., 4₈ onto the *x-y* plane. The quadrilateral may equally be regarded as formed by extending lines parallel to the projections of the inner SMA wires 4₁, 4₃, 4₅, 4₇ until those lines intersect the lines extended from adjacent sides s. The lengths *l₁, ...l₄* correspond to an 'at rest' or 'neutral' configuration in which all of the SMA wires 4₁, ..., 4₈ are unpowered.

Although Figure 4A corresponds to the configuration of the known actuator 1, such that the quadrilateral takes the form of a square, depending on the specific configuration of the SMA wires 4₁, ..., 4₈, the quadrilateral may be a kite, a parallelogram, or even an irregular quadrilateral.

For example, referring also to Figure 4B, the projection of the SMA wires 4₁, ..., 4₈ onto a plane perpendicular to the primary axis z is shown for a case when the quadrilateral so formed is irregular. Again, the lengths *l₁*, ..., *l₄* of each side *s₁*, *..., s₄* may be conveniently defined as the lengths the sides of the quadrilateral.

In both of Figures 4A and 4B, the SMA wires 4₁, ..., 4₈ extend for distances perpendicular to the primary axis *z* which substantially span the respective side *s₁*, ..., *s₄* lengths *l₁*, ..., *l₈* (minus small shortfalls due to practicalities of connections, the sizes of which have been exaggerated in Figures 4A and 4B for visual clarity).

However, referring also to Figure 4C, the equivalent projection of the first actuator 18 is shown.

Whilst the orientation of the SMA wires 4₁, ..., 4₈ keeps the quadrilateral the same shape as for the known actuator 1, the projected lengths of the SMA wires 4₁, ..., 4₈ perpendicular to the primary axis z are significantly foreshortened.

Unless stated otherwise, any reference hereinafter to the lengths *l₁*, ..., *l₄* of the first to fourth sides *s₁*, ..., *s₄* should be understood as referring to the lengths of the sides of the quadrilateral of maximum area and bounded by the projections of the SMA wires 4₁, ..., 4₈ on the plane perpendicular to the primary axis z.

Alternative definitions of the side lengths are possible, even if not preferred herein. For example, the length of the first side *s₁* as illustrated in Figure 3 could alternatively be considered to be the dimension of the base 5 of the static part 3 parallel to the y-axis as drawn. Similarly, each of the first to fourth sides *s₁*, ..., *s₄* could be considered to correspond to a physical edge of the static part 3, so that the length of each side *s₁*, ..., *s₄* would be equal to the length of the respective edge of the static part.

Alternatively, the length of each side *s₁*, ..., *s₄* could be considered to correspond to a dimension of the first actuator 18 parallel to that side, *s₁*, ..., *s₄* (for example in implementations in which the static part 3 does not define an outer perimeter of the actuator 18). In such cases, each length may correspond to a respective edge/side of the first actuator 18.

In other implementations it may be more convenient to define the length of each side *s₁,* ..., *s₄* as corresponding to a respective side length of a quadrilateral which bounds a projection of the moving part 2 onto the plane perpendicular to the primary axis z.

Given that the lengths of the SMA wires 4₁, ..., 4₈ change in use whereas the side lengths *l₁*, ..., *l₄* do not (the quadrilateral is defined relative to an unpowered 'neutral' condition), it should be noted that any comparisons made herein between the lengths of the SMA wires 4₁, ..., 4₈ (or components thereof) and dimensions such as the lengths *l₁*, ..., *l₄* of the sides *s₁*, ..., s₄, also refer to the same unpowered (or 'neutral', or 'central'), configuration in which the moving part 2 is in the middle of its range of motion relative to the static part 3.

Preferably, each of the eight SMA wires 4₁, ..., 4₈ of the first actuator 18 should be angled, and the respective lengths of the SMA wires 4₁, ..., 4₈ perpendicular to the primary axis z foreshortened, such that a resonant frequency for movement of the moving part 2 relative to the static part 3 along the primary axis z is increased relative to a configuration in which the length of each SMA wire 4₁, ..., 4₈ perpendicular to the primary axis z is substantially equal to the length *l₁*, ..., *l₄* of a corresponding side *s₁*, ..., *s₄* of the first to fourth sides *s₁*, *...,* s₄. In this context, substantially equal may correspond to more than 80% of a corresponding side length *l₁*, ..., *l₄.*

In other words, compared to the known actuator 1, the first actuator 18 may have an advantageously increased resonant frequency for movements along the primary axis z whilst retaining the same overall height along the primary axis z, or the first actuator 18 may maintain the same resonant frequency for movements along the primary axis z whilst reducing the overall height along the primary axis *z.*

The comparison relative to the known actuator 1 is helpful for understanding how the lengths of each SMA wire 4₁, ..., 4₈ perpendicular to the primary axis z are foreshortened relative to the lengths *l₁*, ..., *l₄* of a corresponding side *s₁*, *...,* s₄. For example, the component of each SMA wire 4₁, ..., 4₈ perpendicular to the primary axis z may preferably be 80% or less, 75% or less, 75% or less, or 70% or less than the length *l₁*, *...l₄* of the respective side *s₁*, ..., *s₄* (i.e. the dimension of the respective side of the quadrilateral defined hereinbefore).

Alternatively, if the side *s₁*, ..., *s₄* lengths are defined relative to dimensions of the static part 3 (or the first actuator 18), as described hereinbefore, the component of each SMA wire 4₁, ..., 4₈ perpendicular to the primary axis z may preferably be 80% or less, 75% or less, 75% or less, or 70% or less than the length of the respective side *s₁*, *..., s₄*.

In another alternative, if the side *s₁*, ..., *s₄* lengths were defined relative to dimensions of the moving part 2, as described hereinbefore, the component of each SMA wire 4₁, ..., 4₈ perpendicular to the primary axis z may preferably be 90% or less, 85% or less, 83% or less, or 80% or less than the length of the respective side.

Still further definitions internal to the first actuator 18 are possible, based on the angles of inclination of each SMA wire 4₁, ..., 4₈. For example, each SMA wire 4₁, ..., 4₈ should make an acute angle of greater than or equal to 14 degrees to a plane perpendicular to the primary axis *z,* for example greater than or equal to 15 degrees, greater than or equal to 16 degrees, or greater than or equal to 17 degrees.

Although the inclination angles of the SMA wires 4₁, ..., 4₈ may always be increased by increasing the length of each SMA wire 4₁, ..., 4₈ parallel to the primary axis z, there are practical limits imposed by the height of the first actuator 18 along the primary axis *z,* which in many applications (for example miniature cameras) should be kept to a minimum. Preferably, each of the SMA wires 4₁, ..., 4₈ has a length parallel to the primary axis z which is less than or equal to 1.2 times a maximum dimension of the static part 3 parallel to the primary axis z. For example, less than or equal to 1.1 times, or less than equal to 1.0 times the maximum dimension of the static part 3 parallel to the primary axis z. Similar considerations and bounds apply if the lengths of the SMA wires 4₁, ..., 4₈ parallel to the primary axis z are instead considered by reference to the dimensions of the moving part 2. Preferably, no more than 30% of the length of each SMA wire 4₁, ..., 4₈ parallel to the primary axis z should extend above (relative to the primary axis) a top surface of the static part 3 and/or a top surface of the moving part 2.

It should be noted that the ranges of relative lengths, angles and so forth described herein have been selected because these ranges (or bounds) are particularly suited to SMA actuators for use in miniature cameras, taking into account typical sizes of objective lenses, maximum heights along the primary axis z, and the need to obtain suitable response frequencies for providing AF and/or OIS functions in such miniature cameras when a device incorporating the camera is held in a hand.

In the first actuator 18, the foreshortening of the SMA wires 4₁, ..., 4₈ relative to the side *s₁*, ..., *s₄* lengths *l₁*, ..., *l₄* provides additional freedom for the relative positioning of the SMA wires 4₁, ..., 4₈ on the sides *s₁*, *..., s₄*. In a simple case, the connection features 7 (defining the connection points 15) may be disposed so that each SMA wire 4₁, ..., 4₈ is located centrally on the respective side *s₁*, ..., *s₄*.

Alternatively, and as illustrated in Figure 3, the connection features 7 (and associated connection points 15) corresponding to the first and second sides *s₁*, *s₂* are offset towards a first corner joining the first and second sides *s₁*, *s₂,* whilst the connection features 7 (and associated connection points 15) corresponding to the third and fourth sides *s₃, s₄* are offset towards a third corner joining the third and fourth sides *s₃, s₄*. In other words, the connection features 7 (and associated connection points 15) are offset towards the posts 6ₐ, 6_{b} on each side *s₁*, *..., s₄*. This configuration may be advantageous over the simple solution of centrally locating the SMA wires 4₁, ..., 4₈, since it makes space available at the diagonally opposite corners of the moving part 2. For example, the regions 19a, 19b of the moving part 2 indicated in Figure 3A may be omitted/truncated, generating additional free volume for positioning components of the first actuator 18 and/or a device incorporating the first actuator 18 (for example a camera). In this way, the first actuator 18 may have reduced height (along the primary axis z) and also reduced lateral size (perpendicular to the primary axis z) compared to the known actuator 1.

In an alternative configuration (not illustrated) of the first actuator, instead of being offset towards the first and third ('static') corners, the connection features 7 (and associated connection points 15) may instead be offset on the second and third sides *s₂, s₃* towards a second ('moving') corner joining those sides, whilst the connection features 7 (and associated connection points 15) on the first and fourth sides *s₁*, *s₄* are offset towards a fourth ('moving') corner joining those side.

In an further alternative configuration (not illustrated) of the first actuator, the connection features 7 (and associated connection points 15) corresponding to the first side *s₁* may be offset towards the first ('static') corner joining the first side *s₁* to the second side *s₂,* the connection features 7 (and associated connection points 15) corresponding to the second side *s₂* may be offset towards the second ('moving') corner joining the second side *s₂* to the third side s₃, the connection features 7 (and associated connection points 15) corresponding to the third side *s₃* may be offset towards the third ('static') corner joining the third side *s₃* to the fourth side *s₄*, and the connection features 7 (and associated connection points 15) corresponding to the fourth side *s₄* may be offset towards the fourth ("moving") corner joining the fourth side *s₄* to the first side *s₁*.

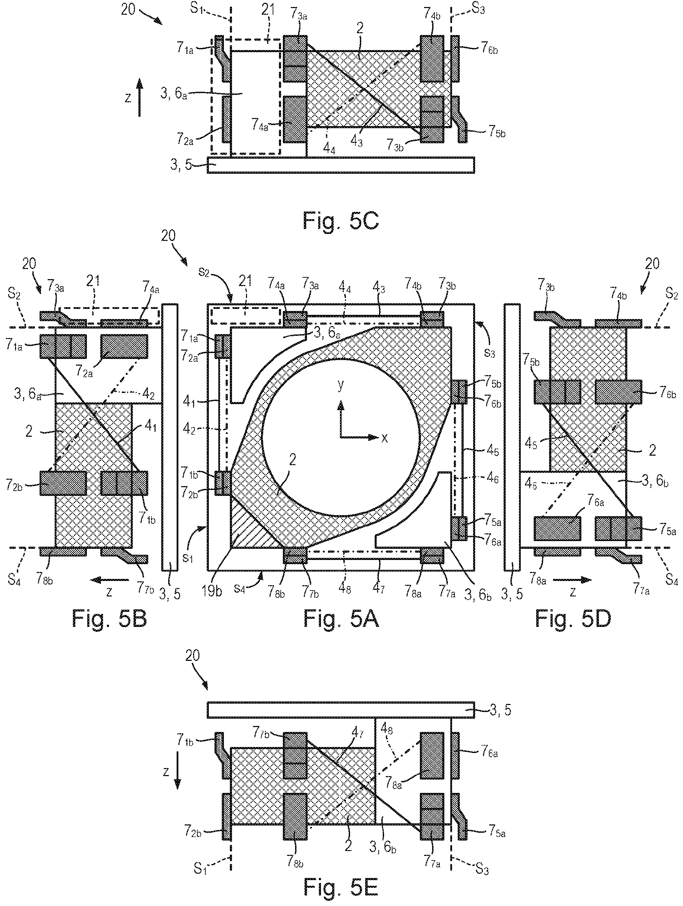

Referring also to Figures 5A to 5E, a second modified actuator 20 (hereinafter "second actuator") is shown.

Figures 5B to 5E have the same geometric relationships to Figure 5A as Figures 1B to 1E to Figure 1A.

The second actuator 20 is the same as the first actuator 18, except that the connection features 7 (and corresponding connection points 15) are offset differently relative to the sides *s₁*, *..., s₄*. In the second actuator 20, the connection features 7 (and associated connection points 15) corresponding to the third and fourth sides s₃, *s₄* are offset towards the third ('static') corner joining the third and fourth sides *s₃, s₄*, in the same way as the first actuator 18.

Also in the same way as the first actuator 18, the connection features 7 (and associated connection points 15) corresponding to the first side *s₁* are offset towards the first ('static') corner joining the first and second sides *s₁*, *s₂.* However, in contrast to the first actuator 18, the connection features 7 (and associated connection points 15) corresponding to the second side *s₂* are offset towards a second ('moving') corner joining the second and third sides *s₂*, s₃.

The offsetting of the connection features 7 (and associated connection points 15) corresponding to the second side *s₂* defines a corresponding volume 21 which is within a footprint of the static part 3. In this example, the volume 21 is over the base 5 of the static part 3, whilst being outside the loop formed by the SMA wires 4₁, ..., 4₈ so that even in use the moving part 2 will not intersect the volume 21. In general, the footprint of the static part 3 represents a projected area of the static part 3 on a plane perpendicular to the primary axis z.

The additional volume 21 may be utilised for positioning components of the second actuator 20 and/or of a device incorporating the second actuator 20 (for example a camera) (such components are also referred to as 'additional components'). For example, the volume may at least partly receive a portion of the static part 3 and/or one or more terminal connections which are used for making electrical connections to the SMA wires 4₁, ..., 4₈, in particular when the volume 21 is adjacent or proximate to elements of the static part 3 such as the posts 6ₐ, 6_{b} or similar structure.

In this way, the second actuator 20 may have reduced height (along the primary axis *z*) and also reduced lateral size (perpendicular to the primary axis *z*) compared to the known actuator 1.

Alternative configurations (not shown) are possible, corresponding to cyclic permutations of the offsets illustrated for the second actuator 20.

### Balancing tilt movements for foreshortened SMA wires

When SMA wires 4₁, ..., 4₈ foreshortened to allow increased inclination angles are disposed centrally on the corresponding sides *s₁*, ..., *s₄,* the SMA wires 4₁, ..., 4₈ remain balanced for tilts about the *y=x* and *y=-x* axes.

However, for the first and second actuators 18, 20, the SMA wires 4₁, ..., 4₈ are not central on the sides *s₁*, ..., *s₄* of the actuator 18, 20, and the crossing points of the SMA wires 4₁, ..., 4₈ are offset from the centre of the actuator 18, 20 in the *x*/*y* direction.

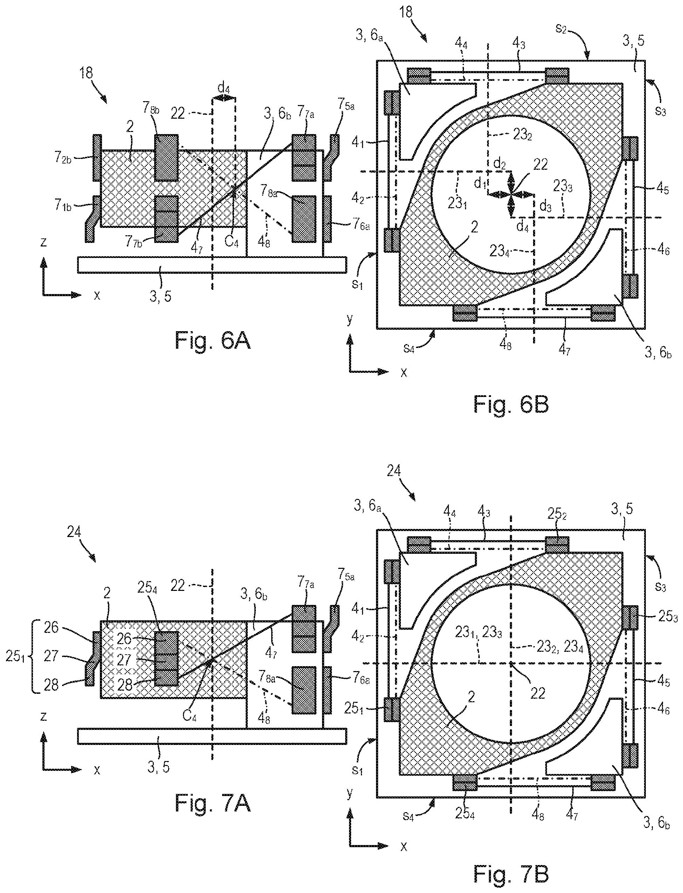

Referring also to Figures 6A and 6B, the first actuator 18 is illustrated to highlight the offset of wire crossing points. Figure 6A is a side view of the first actuator 18 along the y-axis as shown, and Figure 6B is a plan view. For visual clarity, the axes are shown displaced from the centre of the first actuator 18 in Figure 6B.

For each side *s₁*, ..., *s₄,* projections of the two corresponding wires 4₁, ..., 4₈ onto a plane (for example the support plane *S₁*, ..., *S₄*) parallel to that side *s₁*, *..., s₄* intersect at a crossing point *C₁, ..., C₄.* Figure 6A illustrates a side view showing the fourth side s4, and the crossing point *C₄* is offset by a distance *d₄* from an intersection 22 of the diagonals of a shape formed by sides *s₁*, *..., s₄.* Respective offsets *d₂, d₂, d₃* may be similarly defined for the first, second and third sides *s₁*, *S₂, S₃.*

A line 23₁, ..., 23₄ may be drawn perpendicular to each side *s₁*, ..., *s₄* and passing through the respective crossing point *C₁, ..., C₄.* Referring in particular to Figure 6B, the offsets *d₁,* ..., *d₄* of the lines 23₁, ..., 23₄ corresponding to the crossing points *C₁,* ..., *C₄* from the intersection 22 of the diagonals may be observed.

A consequence of the offsets *d₁,* ..., *d₄* is that the tilt to wire length gain about the diagonal containing the second and fourth ('moving') corners will be higher than the tilt to wire length gain about the first and third ('static') corners. The term "tilt to wire length gain" refers to the ratio between tilt angle about a particular axis and the corresponding length change of SMA wires 4₁, ..., 4₈ needed to provide that tilt angle.

Although illustrated in Figures 6A and 6B for the first actuator 18, similar considerations of offsets *d₁,* ..., *d₄* apply to the second actuator 20, or indeed any actuator utilising SMA wires 4₁, ..., 4₈ which are foreshortened relative to the sides *s₁*, ..., *s₄* without being centrally positioned on the sides *s₁*, *..., s₄.*

Disparities in tilt to wire length gains about different tilting axes may be reduced, or even eliminated, by shifting each crossing point *C₁, ..., C₄* towards alignment with the projection of the intersection 22 of the diagonals onto the respective side *s₁*, *..., s₄.*

For example, referring also to Figures 7A and 7B, a third modified actuator 24 (hereinafter third actuator) is shown. Figure 7A is a side view of the third actuator 24 along the y-axis, and Figure 7B is a plan view. For visual clarity, the axes are shown displaced from the centre of the third actuator 24 in Figure 7B.

The third actuator 24 is the same as the first actuator 18, except that the connection points 15 for attaching the SMA wires 4₁, ..., 4₈ to the moving part 2 are shifted towards the centre of the moving part 2 along the primary axis z. This also shifts the crossing points *C₁, ..., C₄* towards alignment with the intersection 22. Preferably, the connection points 15 for attaching the SMA wires 4₁, ..., 4₈ to the static part 3 are not moved further apart, to avoid increasing the height of the third actuator 24 along the primary axis z. This may slightly reduce the inclination angles of the SMA wires 4₁, ..., 4₈, although this may be compensated by further shortening of the overall lengths of the SMA wires 4₁, ..., 4₈ if needed.

In general, the connection points 15 may be arranged in order to minimise the offsets *d₁,* ..., *d₄* of the lines 23₁, ..., 23₄ passing through the respective crossing points *C₁, ..., C₄* from the intersection 22 of the diagonals. Ideally, the lines 23₁, ..., 23₄ will substantially intersect the intersection 22 of the diagonals, as illustrated in Figures 7A and 7B, although perfect coincidence may not always be possible given the need to avoid excessively reducing the SMA wire 4₁, ..., 4₈ inclination angles. The language "substantially intersect" may correspond to there being a minimum distance, i.e. the offsets *d₁,* ..., *d₄* between a line 23₁, ..., 23₄ and the intersection 22 being less than or equal to 15% of a length of the respective side *s₁*, *..., s₄.* For example, less than or equal to 10%, or less than or equal to 5%.

In this way, foreshortened and offset SMA wire 4₁, ..., 4₈ configurations may be obtained which retain similar or identical sensitivity, i.e. tilt to wire length gains, around the different tilt axes in the *x-y* plane.

Whilst it may be possible to simply shift the connection points 15 to the moving part 2 by simply translating the corresponding connection features 7_{1b}, ..., 7_{8b} closer towards the centre of the moving part 2 along the primary axis, it may be simpler to integrate the pairs of (moving) connection features 7 on each side *s₁*, ..., *s₄.* For example, in the third actuator 24, the first and second SMA wires 4₁, 4₂ are connected to the moving part 2 via a first integrated connection feature 25₁, the third and fourth SMA wires 4₃, 4₄ are connected to the moving part 2 via a second integrated connection feature 25₂, the fifth and sixth SMA wires 4₅, 4₆ are connected to the moving part 2 via a third integrated connection feature 25₃, and the seventh and eighth SMA wires 4₇, 4₈ are connected to the moving part 2 via a fourth integrated connection feature 25₄. Each integrated connection feature 25₁, ..., 25₄ includes an inner portion 26, an intermediate portion 27 and an outer portion 28. Each inner portion 26 is attached to the moving part 2 substantially in the respective support plane *S₂,* ..., *S₄,* and also provides a connection point 15 for the respective inner SMA wire 4₂, 4₄, 4₆, 4₈. Each intermediate portion 27 is angled/folded to provide an offset of the connected outer portion 28 from the respective support plane *S₂,* ..., *S₄* in a direction away from the primary axis z. Each outer portion 28 provides a connection point for the respective outer SMA wire 4₁, 4₃, 4₅, 4₇.

The integrated connection features 25 may be formed of the same materials and using the same methods as the connection feature 7. If the integrated connection features 25 are made of metal or other conductive materials, then the integrated connection features 25 may be used as a common return for currents in the pair of connected SMA wires 4₁, ..., 4₈, as described hereinbefore.

Although the third actuator 24 has been described as a modification of the first actuator 18, the same principles are applicable to the second actuator 20, or any other SMA actuator utilising SMA wires 4₁, ..., 4₈ which are foreshortened relative to the sides *s₁*, ..., *s₄* without being centrally positioned on the sides *s₁*, *..., s₄.*

The examples of the first and third actuators 18, 24 have sides *s₁*, ..., *s₄* forming a square shape, however, similar principle are applicable to sides *s₁*, ..., *s₄* which, projected onto a plane perpendicular to the primary axis form any other regular or irregular quadrilateral such as, for example, a rectangle, a parallelogram, a kite, and so forth. In the general case, a diagonal of the four sides *s₁*, *..., s₄* corresponds to a line joining a pair of corners of the four sides which do not have a side in common. In other words, a diagonal connects the first and third corners and another diagonal connected the second and fourth corners (corners as defined hereinbefore), and the crossing points *C₁, ..., C₄* may be adjusted to align with the intersection 22 of these diagonals.

### Offsetting connection points to generate additional free volumes

Foreshortening the SMA wires 4₁, ..., 4₈ relative to the side *s₁*, ..., *s₄* lengths *l₁, ..., l₄* is not the only approach to generating additional, usable, free volume within the footprint of an SMA actuator.

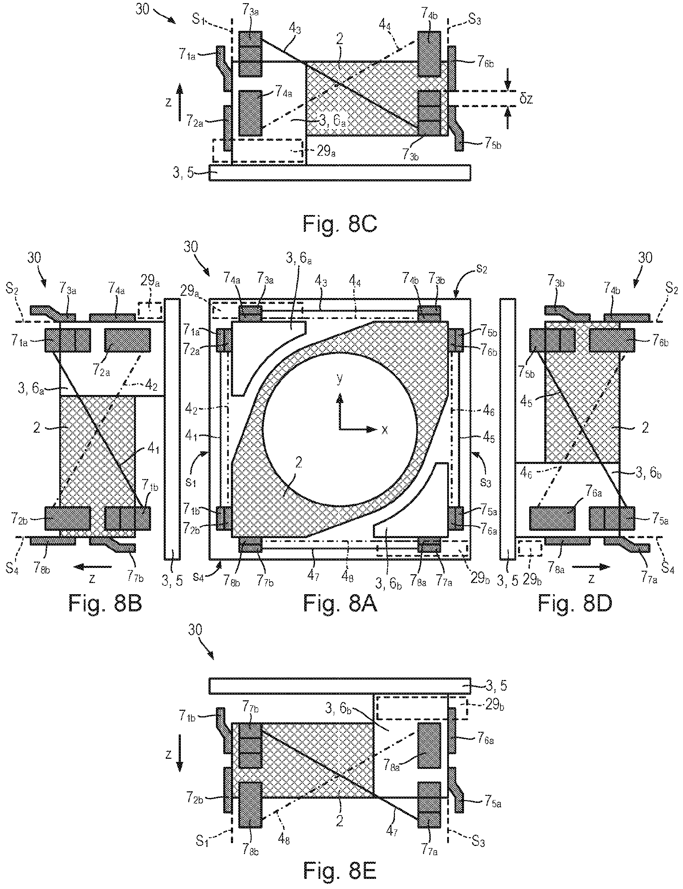

In general, one or more connection points 15 (for example provided by connection features 7) corresponding to at least one (but not all) of the sides *s₁*, *..., s₄* may be displaced relative to corresponding connection points 15 of a reference actuator, so as to define an additional volume 29 (Figure 8) relative to that reference actuator.

The known actuator 1 is an example of a suitable reference actuator. In general the reference actuator is the same as the known actuator 1, except that the specific configurations of connection points 15 for the SMA wires 4₁, ..., 4₈ may vary from the known actuator 1 whilst providing for the same degrees of freedom of movement of the moving part 2 relative to the static part 3. Additionally, in a suitable reference actuator, the relative positioning of the connection points 15 on the first and third sides *s₁*, *s₃* substantially correspond, and the relative positioning of the connection points 15 on the second and fourth sides *s₂, s₄* also substantially correspond.

In other words, without specifying displacements relative to a reference actuator, the one or more connection points 15 on one side, for example the first side *s₁* may be offset differently relative to the first side *s₁* (or the corresponding support plane *S₂*) compared to the offsets of equivalent connection points 15 corresponding to at least one of the other sides *s₂, s₃, s₄* relative to that other side *s₂, s₃, s₄.* Such different relative offset(s) of the one or more connection points on the first side *s₁* may define the additional volume 29 (Figure 8).

A projected area of the additional volume 29 (Figure 8) on a plane perpendicular to the primary axis z may be at least partly (and more preferably wholly) within a projected area of the static part 3 on the same plane. In other words, the additional volume 29 (Figure 8) is within lateral footprint/area of the actuator. In other examples, the projected area of the additional volume 29 on a plane perpendicular to the primary axis may be wholly or partly within a projected boundary, on the same plane, of the loop formed by the SMA wires 4₁, ..., 4₈.

For example, referring also to Figures 8A to 8E, a fourth modified actuator 30 (hereinafter the "fourth actuator") is shown.

Figures 8B to 8E have the same geometric relationships to Figure 8A as Figures 1B to 1E to Figure 1A.

The fourth actuator 30 is the same as the known actuator 1 (in the alternative configuration with the first group of SMA wires 4₁, 4₃, 4₅, 4₇ configured as the outer wires), except that the connection features 7₃ₐ, 7_{3b}, 7₄ₐ, 7_{4b} on the second side *s₂* and the connection features 7₇ₐ, 7_{7b}, 7₈ₐ, 7_{8b} on the fourth side *s₄* have all been displaced parallel to the primary axis z by an amount δz. In this way, a first additional volume 29ₐ is defined on the second side *s₂,* adjacent to the first post 6ₐ and below (relative to the primary axis z) the displaced connection feature 7₄ₐ. Similarly, a second additional volume 29_{b} is defined on the fourth side s₄, adjacent to the second post 6_{b} and below the displaced connection feature 7₈ₐ.

The additional volumes 29ₐ, 29_{b} are free volumes in the sense that the moving part 2 will not intersect them in use, so that the additional volumes 29ₐ, 29_{b} may be utilised for positioning additional components. The locations of the additional volumes 29ₐ, 29_{b} next to the posts 6ₐ, 6_{b} of the static part 3 may be particularly well suited for receiving one or more terminals coupled to the SMA wires 4₁, ..., 4₈, and used for making electrical connection to the fourth actuator 30. In this way, the fourth actuator 30 may have reduced lateral size (perpendicular to the primary axis z) compared to the known actuator 1, by fitting more components within the existing area of the static part 3 (in this example over the base 5).

Although illustrated with the connection points 15 (provided by connection features 7) of the second and fourth sides *s₂, s₄* displaced by δz along the primary axis z relative to the known actuator 1, in alternative configurations (not illustrated), the connection points 15 of any pair of the first to fourth sides *s₁*, ..., *s₄* may be displaced by δz along the primary axis z relative to the known actuator 1.

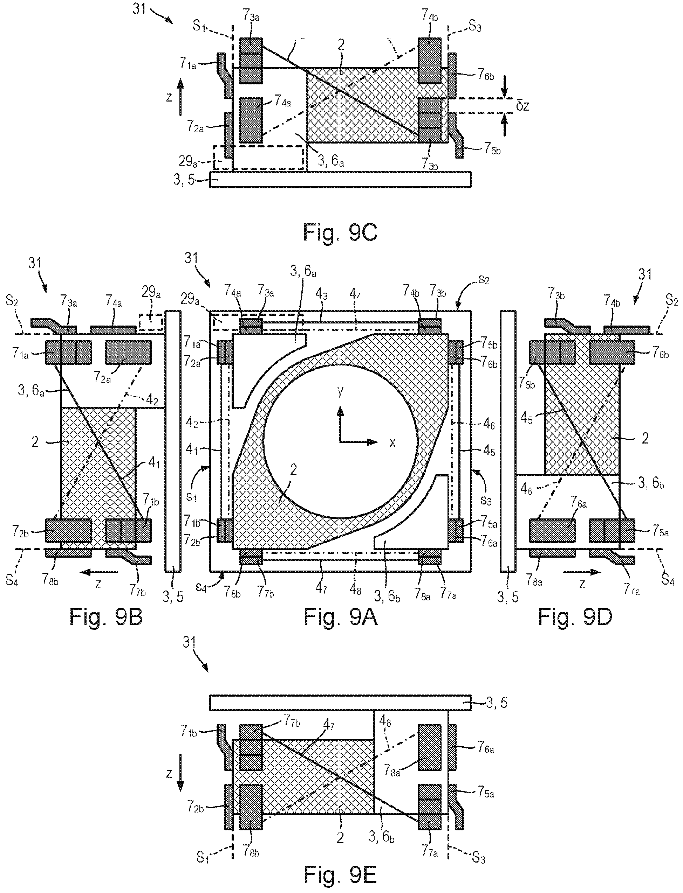

Referring also to Figures 9A to 9E, a fifth modified actuator 31 (hereinafter the "fifth actuator") is shown.

Figures 9B to 9E have the same geometric relationships to Figure 9A as Figures 1B to 1E to Figure 1A.

The fifth actuator 31 is the same as the fourth actuator 30, except that only the connection features 7₃ₐ, 7_{3b}, 7₄ₐ, 7_{4b} on the second side *s₂* are displaced parallel to the primary axis z by an amount δz, so that only the first additional volume 29ₐ is defined.

Although illustrated with the connection points 15 (provided by connection features 7) of the second side *s₂* displaced by δz along the primary axis z relative to the known actuator 1, in alternative configurations (not illustrated), the connection points 15 of any one of the first to fourth sides *s₁*, *..., s₄* may be displaced by δz along the primary axis z relative to the known actuator 1.

Although the fourth and fifth actuators 30, 31 have been illustrated with the displacements δz in a positive sense along the primary axis z, in other implementations (not illustrated) the displacements δz may be made in a negative sense along the primary axis z, so as to define additional volumes 29ₐ, 29_{b} above the SMA wires 4₁, ..., 4₈. Such additional volumes 29ₐ, 29_{b} may be useful for positioning additional components, in the same way as additional volumes 29ₐ, 29_{b} defined below the SMA wires 4₁, ..., 4₈.

Displacements of one or more connection points to define additional volumes 29a, 29b are not limited to offsets along the primary axis z.

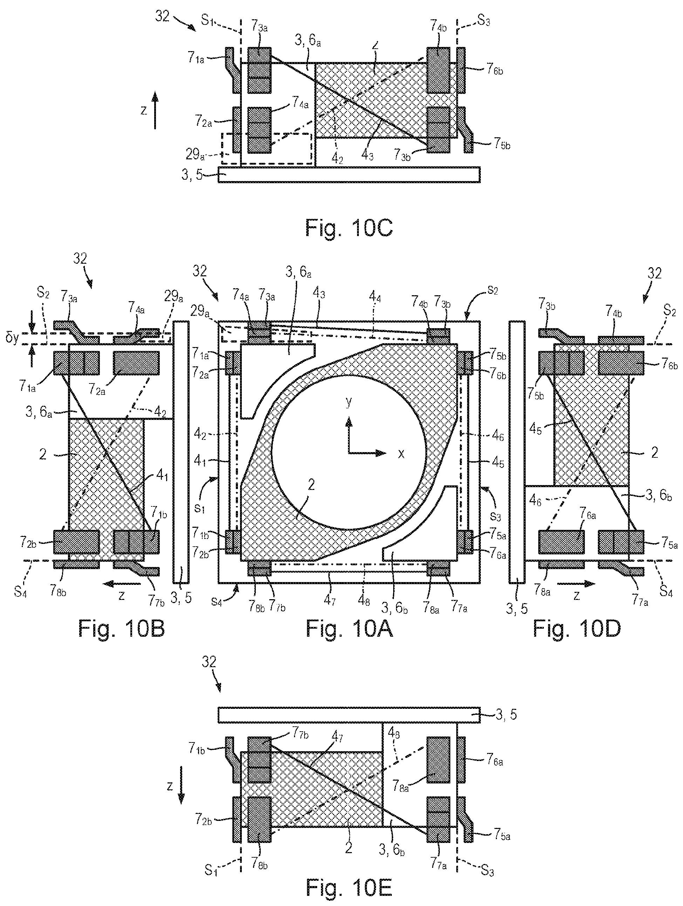

Referring also to Figures 10A to 10E, a sixth modified actuator 32 (hereinafter the "sixth actuator") is shown.

Figures 10B to 10E have the same geometric relationships to Figure 10A as Figures 1B to 1E to Figure 1A.

The sixth actuator 32 is the same as the known actuator 1 (in the alternative configuration with the first group of SMA wires 4₁, 4₃, 4₅, 4₇ configured as the outer wires), except that the connection points 15 at which the third and fourth wires 4₃, 4₄ are attached to the static part 3 (via the first post 6ₐ) have been displaced perpendicularly away (relative to the primary axis z) from the respective support plane S₂ by an amount *δy,* in this case parallel to the y-axis as illustrated. In the example shown in Figure 10, this is accomplished by angling/folding the intermediate portions 17 of the connection features 7₃ₐ, 7₄ₐ to increase the offset between the respective support portions 16 and connection points 15 by *δy.* Alternatively, the shape of the post 6ₐ could be modified, or a protrusion (not shown) extending along the y-axis could be added to the post 6ₐ.

The connection points 15 at which the third and fourth wires 4₃, 4₄ are attached to the moving part 2 are the same as in the known actuator 1, causing the third and fourth SMA wires 4₃, 4₄ to be inclined relative to the support plane S₂. The shape of the loop formed by the SMA wires 4₁, ..., 4₈, when viewed from above or otherwise projected onto a plane perpendicular to the primary axis z, is an irregular quadrilateral.

In this way, a first additional volume 29ₐ is defined on the second side *s₂,* between the third and fourth SMA wires 4₃, 4₄ and the first post 6ₐ (equivalently, between the third and fourth SMA wires 4₃, 4₄ and the primary axis z). The additional volume 29ₐ may be utilised for positioning additional components of the sixth actuator 32 and/or of a device incorporating the sixth actuator 32 (for example a camera). The locations of the additional volume 29ₐ next to the post 6ₐ of the static part 3 may be particularly well suited for accommodating one or more terminals coupled to the SMA wires 4₁, ..., 4₈, and used for making electrical connection to the sixth actuator 32. In this way, the sixth actuator 32 may have reduced lateral size (perpendicular to the primary axis z) compared to the known actuator 1, by fitting more components within the existing area of the static part 3 (in this example over the base 5).

The size of the first additional volume 29ₐ in the sixth actuator 32 may be further increased by switching the third SMA wire 4₃ to be the inner wire and the fourth SMA wire 4₄ to be the outer wire in the second side s₂.

Although illustrated with one end of each of the SMA wires 4₃, 4₄ of the second side *s₂* away from the support plane S₂ the connection points 15 of any one of the first to fourth sides *s₁*, *..., s₄* may be displaced analogously. In further configurations (not illustrated), the connection points 15 of any pair of the first to fourth sides *s₁*, *..., s₄* may be displaced analogously. In some configurations, both ends of each of the SMA wires 4₃, 4₄ may be displaced in a direction perpendicular to the primary axis z (i.e. along the y axis as illustrated in Figure 10A) relative to the reference actuator. In such configurations, each of the SMA wires 4₃, 4₄ are parallel to the x axis.

In the reference actuator, the pair of SMA wires 4₁, ..., 4₈ on each side *s₁*, *..., s₄* are substantially parallel (e.g. within ± 5 degrees) to each other when projected onto a plane perpendicular to the primary axis *z* (i.e. when viewed from above/below). The known actuator 1 satisfies this condition. In the fourth, fifth and sixth actuators 30, 31, 32, the displacements *δz, δy* of the connection points 15 on at least one side s₁, ..., s₄, relative to the known actuator, have preserved this relationship, such that the SMA wires 4₁, ..., 4₈ on each side remain parallel when projected onto a plane perpendicular to the primary axis z. However, displacements of connection points 15 relative to the reference actuator do not need to maintain this relationship.

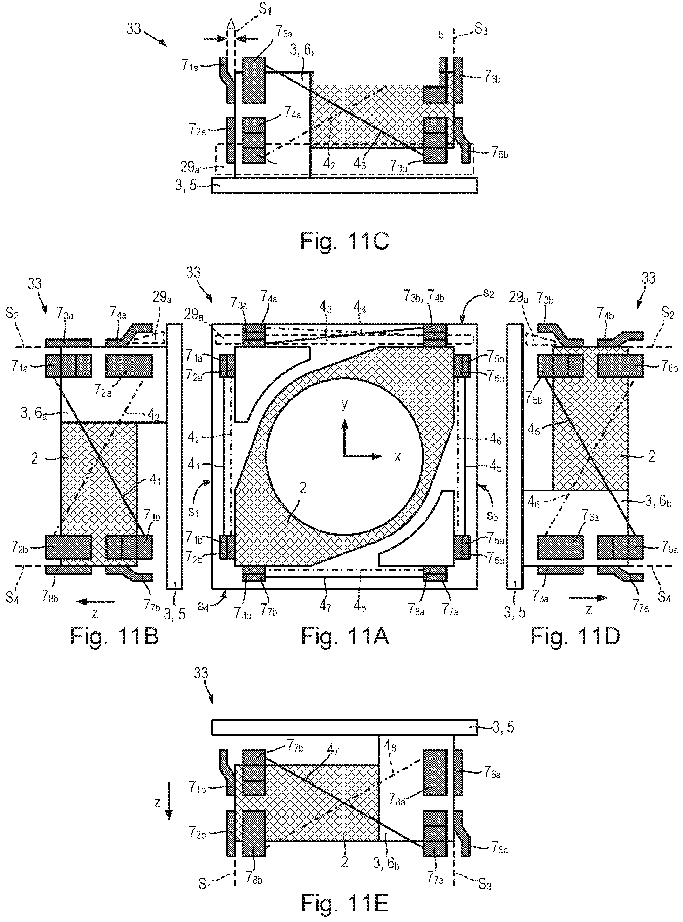

For example, referring also to Figures 11A to 11E, a seventh modified actuator 33 (hereinafter the "seventh actuator") is shown.

Figures 11B to 11E have the same geometric relationships to Figure 11A as Figures 1B to 1E to Figure 1A.

The seventh actuator 33 is the same as the known actuator 1 (in the alternative configuration with the first group of SMA wires 4₁, 4₃, 4₅, 4₇ configured as the outer wires), except that the connection features 7₃ₐ, 7₄ₐ and 7_{4b} on the second side are displaced. In the reference actuator in the form of the alternative configuration of the known actuator 1, the first group of SMA wires 4₁, 4₃, 4₅, 4₇ provide the outer wires, and the corresponding connection points 15 are offset by a distance *Δ* perpendicular from the respective support planes *S₁,* ..., *S₄.* The distance *Δ* is shown in Figure 11C for connection feature 7₁ₐ, which is providing a connection point 15 not displaced relative to the reference actuator. In the same reference actuator, the second group of SMA wires 4₂, 4₄, 4₆, 4₈ provide the outer wires, and the corresponding connection points 15 are disposed substantially on the respective support planes *S₁,* ..., *S₄.*

In the seventh actuator 33, the connection point 15 of the third SMA wire 4₃ to the moving part 2, provided by the connection feature 7_{3b}, is displaced perpendicularly away from the support plane *S₂* by an amount *δy*=*2Δ* , whilst the connection point of the third SMA wire 4₃ to the first part 3 (first post 6ₐ), provided by the connection feature 7₃ₐ, is substantially on the support plane S₂. The connection point 15 of the fourth SMA wire 4₄ to the moving part 2, provided by the connection feature 7_{4b}, is displaced perpendicularly away from the support plane S₂ by an amount *δy=Δ,* whilst the connection point of the fourth SMA wire 4₄ to the static part 3 (first post 6ₐ), provided by the connection feature 7₄ₐ, is displaced perpendicularly away from the support plane S₂ by an amount *δy=2Δ.*

In this way, the third and fourth SMA wires 4₃, 4₄ are not parallel when projected onto a plane perpendicular to the primary axis z, and the third and fourth SMA wires 4₃, 4₄ lie close to a plane (also referred to as the 'wire plane') that is angled relative to the primary axis z (and the support plane *S₂*). In this example, the wire plane is further from the support plane S₂ towards the lower end of the actuator (i.e. towards the first part 3). Accordingly, a first additional volume 29ₐ is defined between the wire plane and the moving part 2. Put another way, from the top of the actuator 33, the third and fourth SMA wires 4₃, 4₄ are angled away from the primary axis z.

The additional volume 29ₐ may be utilised for positioning additional components. The location of the additional volume 29ₐ next to the static part 3 may be particularly well suited for receiving, at least partly, one or more terminals coupled to the SMA wires 4₁, ..., 4₈, and used for making electrical connection to the seventh actuator 33. In this way, the seventh actuator 33 may have reduced lateral size (perpendicular to the primary axis z) compared to the known actuator 1, by fitting more components within the existing area of the static part 3 (in this example over the base 5).

Although illustrated with displacements of the SMA wires 4₃, 4₄ of the second side *s₂* compared to the known actuator 1, in alternative configurations (not illustrated), the connection points 15 of any one of the first to fourth sides *s₁*, ..., *s₄* may be displaced analogously. In still further configurations (not illustrated), the connection points 15 of any pair of the first to fourth sides *s₁*, *..., s₄* may be displaced analogously.

Although illustrated with the displacements *δy* having magnitudes equal to an offset Δ of the outer wires in the known actuator 1, or multiples thereof, this is not essential, and the displacements *δy* may have arbitrary magnitude (within practical limits imposed by the overall size of the seventh actuator 33.

The fourth to seventh actuators 30, 31, 32, 33 are examples of SMA actuators in which one or more connection points 15 (for example provided by connection features 7) corresponding to at least one of the sides *s₁*, *..., s₄* may be displaced relative to corresponding connection points 15 of a reference actuator, so as to define an additional volume 29 relative to that reference actuator. In general, the one or more connection points 15 corresponding to at least one of the sides *s₁*, *..., s₄* may be displaced by vectors (*δx, δy, δz*)*.* In other words, combinations of the types of displacement illustrated by the fourth to seventh actuators 30, 31, 32, 33 are possible. The connection points 15 on up to three of the sides *s₁, ..., s₄* may be displaced relative to the reference actuator, in order to define a first volume 29ₐ, optionally a second volume 29_{b} and, in further examples (not illustrated), a third additional volume and so forth.

### Improved fabrication methods for SMA actuators

As described hereinbefore, the connection features 7 of the known actuator 1 are generally provided by at least two types of coupons - a first type for the first and third sides *s₁, s₃,* and a second type for the second and fourth sides *s₂, s₄.* This is because the two configurations of connection features 7 are mirror images of each other and hence cannot be brought into coincidence with one another by rotations or translations.

Using two distinct types of coupons adds to the manufacturing complexity of producing the known actuator 1. Additionally, working with two types of coupons may make it harder to minimise variations in SMA wire diameters and/or compositions within an actuator. SMA wires may be drawn or otherwise produced, however, nearly all wire drawing/extrusion techniques result in a degree of variability along the length of the wire. Variances could lead to imbalances in SMA movements. Variability may be reduced if an SMA actuator could be assembled using lengths of SMA wire which were contiguous in an original spool to form the SMA wires 4₁, ..., 4₈.

Referring also to Figures 12A and 12B, an improved method for forming coupons supporting connection features 7 and SMA wires 4₁, ..., 4₈ is described which may provide reduced variability in SMA wire properties within an SMA actuator. In some implementations, the method may also facilitate using identical coupons to assemble an actuator.

Referring in particular to Figure 12A, a plan view of a first etched sheet 34 is shown.

The first etched sheet 34 is formed by etching a sheet of metal, for example, a steel sheet. The first etched sheet 34 includes a support 35 extending along a length of the first etched sheet 34 (parallel to the *y*-axis as shown). A number of first sets 36 of planar features and second sets 37 of planar features extend from, and are supported by, the support 35. The first and second sets 36, 37 alternate along the length of the support 35.

The first set 36 of planar features includes first and second support portions 38₁, 38₂. The first and second support portions 38₁, 38₂ are connected to the support 35 by pairs of sprues 39. The first support portion 38₁ is closer to the support 35 (along the x-axis as illustrated). A pair of first extensions 40₁, 40₂ extend from the first support portion 38₁ back towards the support 35 (in the positive x-direction as illustrated), and are separated by a waist portion 41 formed in the first support portion 38₁ by a notch 42. The support 35 includes a corresponding notch 42 (at a corresponding position along the *y*-axis as illustrated). A pair of second extensions 43₁, 43₂ extend from the second support portion 38₂ away from the support 35 (opposite to the first extensions 40₁, 40₂, in the negative x-direction as illustrated), and are separated by a waist portion 41 formed in the second support portion 38₂ by a notch 42. The waist portions 41 of the first and second support portions 38₁, 38₂ are aligned (along the *y*-axis as illustrated). The first extensions 40₁, 40₂ are longer than the second extensions 43₁, 43₂.

The second set 37 of planar features is the same as the first set, except that the respective first extensions 40₁, 40₂ extend from the second support portion 38₂ in a direction away from the support 35, whilst the second extensions 43₁, 43₂ extend from the first support portion 38₁ back towards the support 35. In other words, between the first and second sets 36, 37, the positions of first and second extensions 40, 43 are mirrored about a point midway between the support portions 38₁, 38₂.

Referring in particular to Figure 12B, a plan view of a first frame 44 is shown.

The first frame 44 is formed by bending the first etched sheet 34 as follows. The first etched sheet 34 is planar in a support plane S (corresponding to the plane of Figure 12). Each first extension 40₁, 40₂ is bent along three lines (dashed in Figure 12A) which separate, in order, the respective support portion 38₁ or 38₂, an intermediate portion 45, a connection portion 46 and a fold-over portion 47. Each first extension 40₁, 40₂ is folded as the first fold (dashed) line so that the respective intermediate portion 45 is inclined above the support plane S at an angle *θ*. At the other end of the intermediate portion 45, at the second fold line, the first extension 40₁, 40₂ is folded back by an angle -*θ*, such that the respective connection portion 46 is parallel to the support plane S, but offset above it (in the positive z-direction as illustrated). Finally, the fold-over portion 37 is bent back in a U-shape to lie over the respective connection portion 46. A gap for receiving an SMA wire 4 is left between the connection portion 46 and the fold-over portion 37.

Each second extension 43₁, 43₂ is bent along a single fold (dashed) line separating a connection portion 48 from a fold-over portion 49. The fold-over portion 49 is bent back in a U-shape to lie over the respective connection portion 48 of each second extension 44₃, 43₂. A gap for receiving an SMA wire 4 is left between the connection portion 48 and the fold-over portion 49.

In this way, the first frame 44 supports a number of first 50 and second 51 connection features arranged (when projected onto the x-y plane) in a pattern along a first line 52, and a number of third 53 and fourth 54 connection features arranged (when projected onto the x-y plane) in a pattern along a second line 55 parallel to the first line 52. Each first connection feature 50 includes first and second sub-features 56₁, 56₂ formed from corresponding first extensions 40₁, 40₂ of one of the first sets 36. Each second connection feature 51 includes first and second sub-features 57₁, 57₂ formed from corresponding second extensions 43₁, 43₂ of one of the second sets 37.

Similarly, each third connection feature 53 includes first and second sub-features 58₁, 58₂ formed from corresponding second extensions 43₁, 43₂ of one of the first sets 36, and each fourth connection feature 54 includes first and second sub-features 59₁, 59₂ formed from corresponding first extensions 40₁, 40₂ of one of the second sets 37.

In this way, the first and fourth connection features 50, 54 are offset above the support plane S, whilst the second and third connection features 51, 53 remain substantially within the support plane S (the fold-over portions 47, 49 being slightly above the support plane S).

A first length of shape memory alloy, SMA, wire 60 is attached to each of the first and fourth connection features 50, 54, such that the first and fourth connection features 50, 54 alternate along the first length of SMA wire 60. Similarly, a second length of SMA wire 61 is attached to each of the second and third connection features 51, 53 such that the third and second connection features 51, 53 alternate along the second length of SMA wire 61.

When projected onto the x-y plane, the first and second lengths of SMA wire 60, 61 will cross at crossing points C spaced along a mid-line 62 equidistant between the first and second lines 52, 55.

In this example, the first and fourth connection features 50, 54 are offset above the support plane S relative to the second and third connection features 51, 53, so in practice it is easier to connect the second length of SMA wire 61 first. The second length of SMA wire 60 is received between the connection portions 48 and fold-over portions 49 of the second and third connection features 51, 53, followed by crimping to press respective connection portions 48 and fold-over portions 49 together to secure the second length of SMA wire 61. Subsequently, the first length of SMA wire 60 is received between the connection portions 46 and fold-over portions 47 of the first and fourth connection features 50, 54, followed by crimping to press respective connection portions 46 and fold-over portions 47 together to secure the first length of SMA wire 60.

The frame 44 is then cut to form a number of coupons, each coupon supporting (or equivalently including) at least part of each of the first to fourth connection features 50, 51, 53, 54. Coupons which were adjacent in the frame 44 may be used to assemble SMA actuators, minimising any variability in diameter, composition and so forth between sections of the lengths of SMA wire 60, 61 which form the wires 4₁, ..., 4₈ in an actuator.

The frame 44 may be cut to form coupons at some, or all, of the cut/fold lines 63₁, ..., 63₈ illustrated in Figure 12B. Each cut/fold line 63 coincides with the notches 42 and waists of the support portions 38₁, 38₂ (and also notches 42 in the support 35), which facilitates cutting the frame 44, or in some examples, folding the frame 44, at the cut/fold lines 63. When cutting along cut/fold lines 63, the lengths of SMA wire 60, 61 are also cut (e.g. before cutting the frame 44). When folding along cut/fold lines 63, the lengths of SMA wire 60, 61 may be cut (e.g. before folding the frame 44), but this is not essential.

Referring again to Figure 1, coupons for fabricating the known actuator 1 may be obtained by cutting a first coupon between lines 63₂ and 63₃ corresponding to the first side *s₁,* a second coupon between lines 63₃ and 63₄ corresponding to the second side *s₂,* a third coupon between lines 63₄ and 63₅ corresponding to the third side *s₃,* and a fourth coupon between lines 63₅ and 63₆ corresponding to the fourth side *s₄.* The first to fourth coupons defined in this way are then attached to the static 3 and moving 2 parts, with the supports 35 orientated at the bottom (relative to the primary axis z).

For example, in the first coupon cut between lines 63₂ and 63₃, the sub-feature 5₆₁ provides the connection feature 7₂ₐ, the sub-feature 59₂ provides the connection feature 7_{2b} and the connected section of second length of SMA wire 60 provides the second wire 4₂. Similarly, the sub-feature 58₁ provides the connection feature 7₁ₐ, the sub-feature 57₂ provides the connection feature 7_{1b} and the connected section of the second length of SMA wire 61 provides the first wire 4₁. Similar mappings exist between the second to fourth coupons and the second to fourth sides *s₂, s₃, s₄* of the known actuator 1.

Once all of the connection features 7 are secured to the static 3 or moving 2 part as required, the sprues 39 are severed to detach the sections of the support 35 included in each of the coupons. The sprues 39 may be severed close to the support 35, leaving sections of the sprues 39 extending down towards the bottom of the known actuator 1, which may be utilised for making electrical connections to the SMA wires 4₁, ..., 4₈.

In this way, fabrication of the known actuator 1 may be simplified, by allowing forming of the connection features 7 and attachment (in this example by crimping) of the SMA wires in a single process prior to assembly. As mentioned hereinbefore, using sequential coupons may also help to reduce variability in the properties of the SMA wires 4₁, ..., 4₈. However, even if sequential coupons are not used, the process of producing the two types of coupons needed for the known actuator may nonetheless be simplified using this method.

The alternative configuration of the known actuator 1, in which the first group of SMA wires 4₁, 4₃, 4₅, 4₇ are configured as the outer wires, can also be fabricated using the method. In this case, by cutting a first coupon between lines 63₁ and 63₂ corresponding to the first side *s₁,* a second coupon between lines 63₂ and 63₃ corresponding to the second side *s₂,* a third coupon between lines 63₃ and 63₄ corresponding to the third side *s₃,* and a fourth coupon between lines 63₄ and 63₅ corresponding to the fourth side *s₄.* In effect, by shifting along by one cut/fold line 63 (in either direction along the support 35) relative to the coupons for the known actuator 1 as illustrated in Figure 1.

In a modification of the method and the known actuator 1, a pair of identical coupons can be produced by cutting a first coupon between lines 63₂ and 63₄ corresponding to the first and fourth sides *s₁, s₄,* and cutting a second coupon between lines 63₄ and 63₆ corresponding to the third and second sides *s₃, s₂.* The first coupon defined this way is folded through 90 degrees about the cut/fold line 63₃, and then attached to the static 3 and moving 2 parts on the first and fourth sides *s₁, s₄* with the supports 35 orientated at the bottom (relative to the primary axis z). This direction of wrapping is needed because the first and fourth connection features 50, 54 of the frame 44 are offset in the positive z direction above the support plane S - if the offset were instead in the negative direction below the support plane S, then the first coupon could instead be wrapped from the first side *s₁* round to the second side *s₂*. The notches 42 and waists 41 assist in folding the coupon in the correct location. Similarly, the second coupon defined this way is folded through 90 degrees about the cut/fold line 63₅, and then attached to the static 3 and moving 2 parts on the third and second sides *s₃, s₂* with the supports 35 orientated at the bottom (relative to the primary axis *z).*

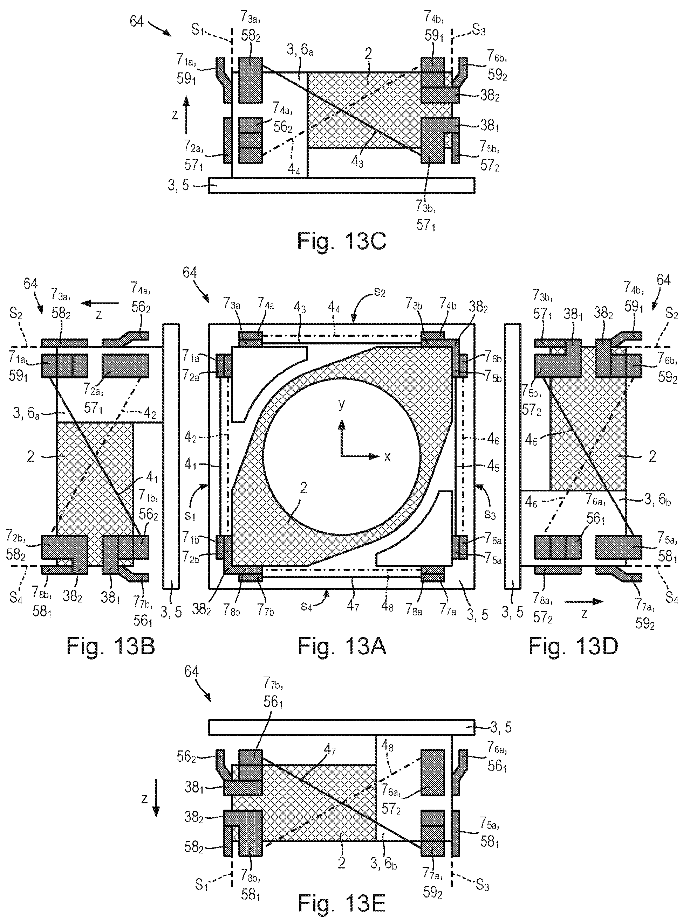

For example, in the first coupon cut between lines 63₂ and 63₄, the sub-feature 58₁ provides the connection feature 7₁ₐ, the sub-feature 58₂ provides the connection feature 7₇ₐ, and the second length of SMA wire 61 provides the first and seventh SMA wires 4₁, 4₇. The connection features 7_{1b} and 7_{7b} are replaced by the second connection feature 51, with the second sub-feature 57₂ in place of the connection feature 7_{1b} and the first sub-feature 57₁ replacing the connection feature 7_{7b}. The waist portion 41 of the second connection feature 51 is folded around the fourth corner between the fourth and first sides *s₄, s₁* (connection features folded around a corner are illustration in Figure 13). Due to the waist portion, the first and seventh wires 4₁, 4₇ are generally (e.g. unless somehow insulated from the second connection feature 51) electrically connected to one another, so the shared connection feature 51 can be used as a common return path to allow independent control of drive currents in the first and seventh wires 4₁, 4₇ (as described hereinbefore). This is advantageous as the number of electrical connections which need to be made to the moving part 3 can be reduced.

Similarly, in the first coupon cut between lines 63₂ and 63₄, the sub-feature 56₁ provides the connection feature 7₂ₐ, the sub-feature 56₂ provides the connection feature 7₈ₐ, and the first length of SMA wire 60 provides the second and eighth SMA wires 4₂, 4₈. The connection features 7_{2b} and 7_{8b} are replaced by the fourth connection feature 54, with the second sub-feature 59₂ in place of the connection feature 7_{2b} and the first sub-feature 59₁ replacing the connection feature 7_{8b}. The waist portion 41 of the fourth connection feature 54 is folded around the fourth corner between the fourth and first sides *s₄, s₁* (connection features folded around a corner are illustration in Figure 13).

Similar mappings exist between the second coupon cut between the lines 63₄ and 63₆ and the third and second sides *s₃, s₂* of the known actuator 1.

Once all of the connection features 7 are secured to the static 3 or moving 2 part as required, the sprues 39 are severed to detach the sections of the support 35 included in both of the coupons. The sprues 39 may be severed close to the support 35, leaving sections of the sprues 39 extending down towards the bottom of the known actuator 1, which may be utilised for making electrical connections to the SMA wires 4₁, ..., 4₈. Only one section of sprue need be maintained for the connection features 51, 54 folded about the corners.

In this way, an SMA actuator may be fabricated which is identical to the known actuator 1, except that a pair of identical coupons may be used and that the connection features are folded around the posts right-angled corners of the moving part 2. In this way, manufacturing complexity may be reduced.

In both the method of making the known actuator 1 using four coupons cut from the frame 44, and the modified method using two coupons which fold around an adjacent sides *s₁,* ..., *s₄,* the SMA wires 4₂, 4₄, 4₆, 4₈ of the second group (pulling the moving part 2 in the negative z-direction) correspond to the first length of SMA wire 60, whilst SMA wires 4₁, 4₃, 4₅, 4₇ of the first group (pulling the moving part 2 in the positive z-direction) correspond to the second length of SMA wire 61. This may reduce the effects of any variability within these groups, however, variability between the first and second lengths of SMA wire 60, 61 may cause an imbalance in the motions of the moving part 2 along the primary axis z. This possibility may be mitigated by cutting out coupons such that half the wires in each of the first and second groups are provided by the first length of SMA wire 60, whilst the other half are provided by the second length of SMA wire 61.

For example, referring also to Figures 13A to 13E, an eighth modified actuator 64 (hereinafter the "eighth actuator") is shown.

Figures 13B to 13E have the same geometric relationships to Figure 13A as Figures 1B to 1E to Figure 1A.

The eighth actuator 64 is formed using the improved method, using a first coupon cut between lines 63₁ and 63₃ corresponding to the first and fourth sides *s₁, s₄,* and cutting a second coupon between lines 63₄ and 63₆ corresponding to the third and second sides *s₃*, *s₂.* In other words, the section of frame between cut/fold lines 63₃ and 63₄ is omitted or discarded.

The first coupon defined this way is folded through 90 degrees about the cut/fold line 63₂, and then attached to the static 3 and moving 2 parts on the first and fourth sides *s₁, s₄* with the supports 35 orientated at the bottom (relative to the primary axis z). This direction of wrapping is needed because the first and fourth connection features 50, 54 of the frame 44 are offset in the positive z direction above the support plane *S* - if the offset were instead in the negative direction below the support plane S, then the first coupon could instead be wrapped from the first side *s₁* round to the second side *s₂*. The notches 42 and waists 41 assist in folding the coupon in the correct location. Similarly, the second coupon defined this way is folded through 90 degrees about the cut/fold line 63₅, and then attached to the static 3 and moving 2 parts on the third and second sides *s₃*, *s₂* with the supports 35 orientated at the bottom (relative to the primary axis *z).*

For example, in the first coupon cut between lines 63₁ and 63₃, the sub-features 59₁, 56₂, 56₁ and 59₂ respectively provide the connection features 7₁ₐ, 7_{1b}, 7_{7b} and 7₇ₐ, and the first length of SMA wire 60 provides the first and seventh SMA wires 4₁, 4₇. Sub-features 56₁ and 56₂ remain connected by the corresponding first support portion 38₁, which is folded around the fourth corner between the fourth and first sides *s₄, s₁.* Similarly, in the first coupon cut between lines 63₁ and 63₃, the sub-features 57₁, 58₂, 58₁ and 57₂ respectively provide the connection features 7₂ₐ, 7_{2b}, 7_{8b} and 7₈ₐ, and the second length of SMA wire 61 provides the second and eighth SMA wires 4₂, 4₈. Sub-features 58₁ and 58₂ remain connected by the corresponding first support portion 38₂, which is folded around the fourth corner between the fourth and first sides *s₄, s₁.*

In the second coupon cut between lines 63₄ and 63₆, the sub-features 58₁, 57₂, 55₁ and 58₂ respectively provide the connection features 7₅ₐ, 7_{5b}, 7_{3b} and 7₃ₐ, and the second length of SMA wire 61 provides the third and fifth SMA wires 4₃, 4₅. Sub-features 57₁ and 57₂ remain connected by the corresponding first support portion 38₁, which is folded around the second corner between the third and second sides *s₃, s₂.* Similarly, in the second coupon cut between lines 63₄ and 63₆, the sub-features 56₁, 59₂, 59₁ and 59₂ respectively provide the connection features 7₆ₐ, 7_{6b}, 7_{4b} and 7₄ₐ, and the first length of SMA wire 60 provides the fourth and sixth SMA wires 4₄, 4₆. Sub-features 58₁ and 58₂ remain connected by the corresponding first support portion 38₂, which is folded around the fourth corner between the fourth and first sides *s₄, s₁.*

SMA wires 4₁ and 4₇ are electrically connected by the support portion 38₁ around the fourth corner, and the shared connection feature can be used as a common return path to allow independent control of drive currents in the first and seventh SMA wires 4₁, 4₇ (as described hereinbefore). This is advantageous as the number of electrical connections which need to be made to the moving part 3 can be reduced. Similar connections can be used for the pairings of second and eight SMA wires 4₂, 4₈, third and fifth SMA wires 4₃, 4₅, and fourth and sixth SMA wires 4₄, 4₆.

Once all of the connection features 7 are secured to the static 3 or moving 2 part as required, the sprues 39 are severed to detach the sections of the support 35 included in both of the coupons. The sprues 39 may be severed close to the support 35, leaving sections of the sprues 39 extending down towards the bottom of the known actuator 1, which may be utilised for making electrical connections to the SMA wires 4₁, ..., 4₈. Only one section of sprue need be maintained for the connection features folded about the corners.

In the eighth actuator 64, the first group of SMA wires includes two SMA wires 4₁, 4₇ corresponding to the first length of SMA wire 60, and two SMA wires 4₃, 4₅ corresponding to the second length of SMA wire 61. Similarly, the second group of SMA wires includes two SMA wires 4₂, 4₈ corresponding to the second length of SMA wire 61 and two SMA wires 4₄, 4₆ corresponding to the first length of SMA wire 60.

In this way, it may be possible to reduce the impact on vertical (along the primary axis z) movements of the moving part 2 resulting from any variability between the first length of SMA wire 60 and the second length of SMA wire 61.

Although the illustrated frame 44 includes four each of the first, second, third and fourth connection features 50, 51, 53, 54, in general the frame 44 may be of any length it is practical to fabricate, and hence may be longer or shorter and may correspondingly include more or fewer cut/fold lines 63.

Although in these examples the first length of SMA wire 60 is crimped to the first and fourth connection features 50, 54 and the second length of SMA wire 61 is crimped to the second and third connection features 51, 53, in other examples the fold-over portions 47, 49 may be omitted, and the lengths of SMA wire 60, 61 may be connected to the connection features 50, 51, 53, 54 by welding, adhesives, or in any other suitable way.

The specific shapes of the connection features 50, 51, 53, 54 may vary from those shown in Figures 12A and 12B. However, if a coupon is to be folded, then connection features of that coupon are preferably configured to facilitate folding, for example by including notches 42 and waists 41, or equivalent features providing a line of relative weakness against folding deformations.

Although the specific shapes of the connection features 50, 51, 53, 54 may vary from those shown in Figures 12A and 12B, there are features of the geometry which are common to any possible alternative to the frame 44.

In particular, in SMA actuators as described herein, each side *s₁,* ..., *s₄* has an inner SMA wire substantially on or close to the respective support plane *S₁*, ..., *S₄,* for example in the eighth actuator 64 the inner wires are (moving clockwise about the primary axis z) 4₂, 4₃, 4₅, and 4₈. Similarly, each side *s₁,* ..., *s₄* has an outer SMA wire which is offset from the respective support plane *S₁*, ..., *S₄* in a direction away from the primary axis z of the actuator, for example in the eighth actuator 64 the outer wires are (moving clockwise about the primary axis z) 4₁, 4₄, 4₆, and 4₇.

Additionally, when moving clockwise about the primary axis z, and viewing each side *s₁,* ..., *s₄* along a radial direction perpendicular to the primary axis z and that side *s₁,* ..., *s₄,* the corresponding pair of SMA wires adopt either:
1. A first wire configuration, herein "WA", in which the inner SMA wire slopes upwards in a direction tangential to the loop (clockwise about the primary axis z) whilst the outer SMA wire slopes downwards; or
2. A second wire configuration, herein "WB", in which the inner SMA wire slopes downwards in the direction tangential to the loop whilst the outer SMA wire slopes upwards.

For example, the first side *s₁* of the known actuator 1 has wire configuration WB, the second side *s₂* has wire configuration WA, the third side *s₃* has wire configuration WB, and the fourth side *s₄* has wire configuration WA. In other words, in the known actuator 1, each side *s₁,* ..., *s₄* has a different wire configuration to both adjacent sides *s₁,* ..., *s₄.*

When coupons for making SMA actuators are formed using the method described herein, namely by cutting the coupons out from frames in which first 50 and second 51 connection features are arranged (when projected onto the x-y plane) in a pattern along a first line 52, and third 53 and fourth 54 connection features are arranged (when projected onto the x-y plane) in a pattern along a second line 55 parallel to the first line 52, it is apparent that the wire configurations alternate between WA and WB along the length.

Thus, an SMA actuator formed according to the method described herein will have an SMA wire 4₁, ..., 4₈ configuration substantially corresponding to the known actuator 1 if the coupons are cut out in the pattern WA-WB-WA-WB (or equivalent cyclic patterns starting at a different corner).

However, if coupons are cut out such that each side *s₁,* ..., *s₄* has the same configuration of the first and second wire configurations WA, WB as at least one adjacent side *s₁,* ..., *s₄,* the resulting configuration of SMA wires 4₁, ..., 4₈ does not map to the known actuator 1 (or its alternative configuration). The eighth actuator 64 is an example of one such configuration, having the pattern WA-WB-WB-WA (or equivalent cyclic patterns starting at a different corner).

There is a further pattern possible in which all of the sides s₁, ..., s₄ have the same wire configuration, all WA or all WB.

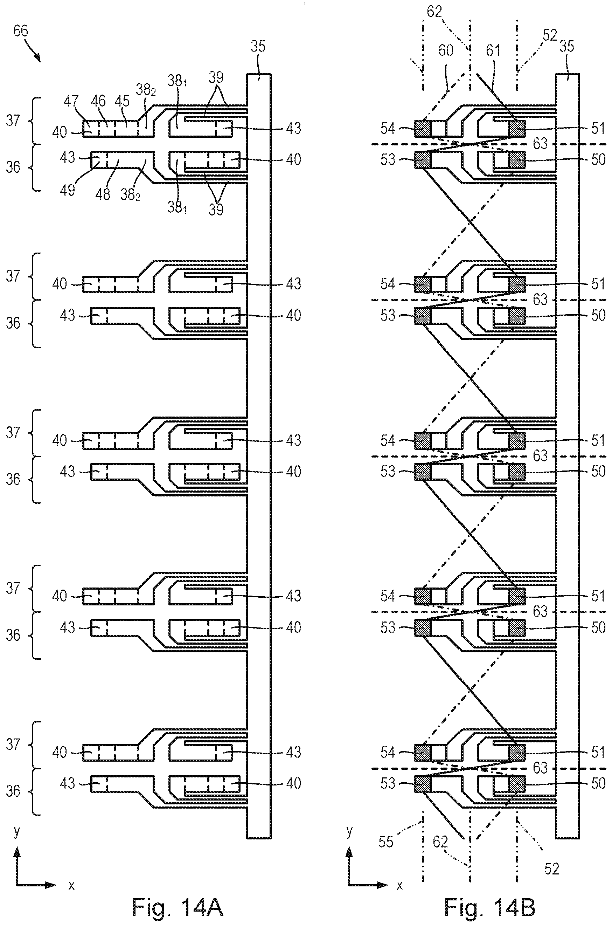

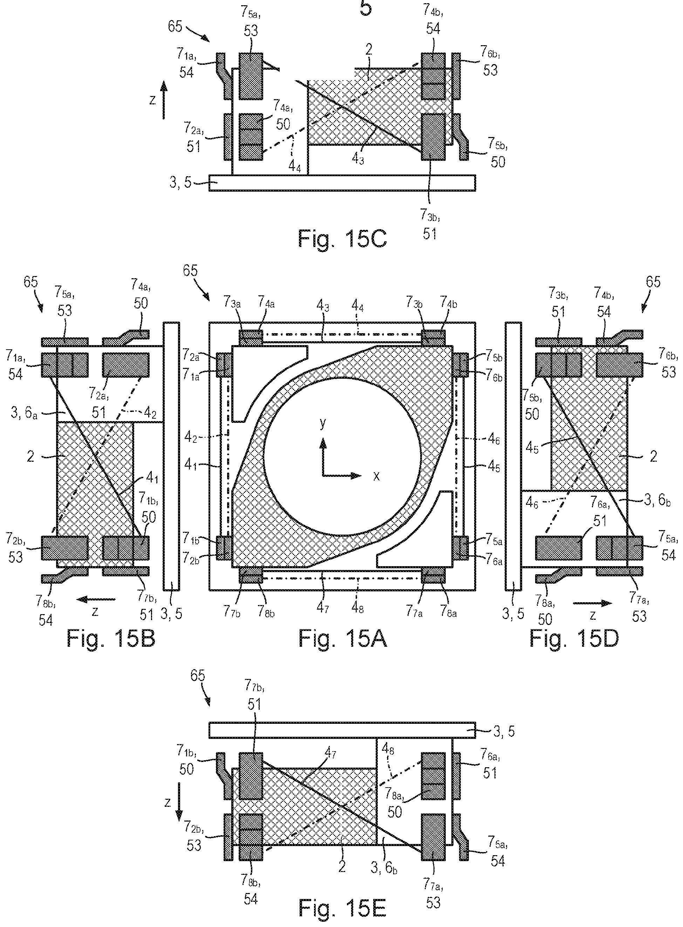

For example, referring also Figures 14A to 15E, a ninth modified actuator 65 (hereinafter the "ninth actuator") is illustrated in which all of the sides s₁, ..., s₄ have the first wire configuration WA.

Referring in particular to Figure 14A, a plan view of a second etched sheet 66 is shown.

The second etched sheet 66 is the same as the first etched sheet 44, except that only one extension 40, 43 extends from each support portion 38₁, 38₂, and the support portions 381, 382 and support 35 include no notches 42. Additionally, the first and second sets 36, 37 of planar features are not evenly spaced along the length of the support 35. Moving along the support 35 parallel to the positive y-axis as illustrated, each first set 36 is separated from the next second set 37 by a relatively short distance, whereas each second set 37 is separated from the next first set 36 by a relatively short distance.

Referring in particular to Figure 14B, a plan view of a second frame 67 is shown.

The second frame 67 is formed from the second etched sheet 66 by bending each extension 40, 43 in the same way described for forming the first frame 44 from the first etched sheet 34. Similarly to the first frame 44, the first and fourth connection features 50, 54 are offset above the support plane S, whilst the second and third connection features 51, 53 remain substantially within the support plane S (the fold-over portions 47, 49 being slightly above the support plane S).

In this way, the second frame 67 supports a number of first 50 and second 51 connection features arranged (when projected onto the x-y plane) in a pattern along the first line 52, and a number of third 53 and fourth 54 connection features arranged (when projected onto the x-y plane) in a pattern along the second line 55 parallel to the first line 52.

In the same way as for the first frame 44, a first length of shape memory alloy, SMA, wire 60 is attached to each of the first and fourth connection features 50, 54, such that the first and fourth connection features 50, 54 alternate along the first length of SMA wire 60. Similarly, a second length of SMA wire 61 is attached to each of the second and third connection features 51, 53 such that the third and second connection features 51, 53 alternate along the second length of SMA wire 61.

When projected onto the x-y plane, the first and second lengths of SMA wire 60, 61 will cross at crossing points C spaced along a mid-line 62 equidistant between the first and second lines 52, 55. This is not essential, and in other examples the connection features 50, 51, 53, 54 may be configured such that crossing points C are offset from the mid-line 62.

The second frame 67 is then cut to form a number of identical coupons, by cutting along each of the indicated cut lines 60. As hereinbefore, each coupon supports (or equivalently includes) at least one each of the first to fourth connection features 50, 51, 53, 54. Coupons which were adjacent in the second frame 67 may be used to assemble the ninth SMA actuator 65, minimising any variability in diameter, composition and so forth between sections of the lengths of SMA wire 60, 61 which form the wires 4₁, ..., 4₈ in the ninth SMA actuator 65.

Four identical coupons defined in this way (preferably sequential along the support 35) are then attached to the static 3 and moving 2 parts, with the supports 35 orientated at the bottom (relative to the primary axis z). Once all of the connection features 7 are secured to the static 3 or moving 2 part as required, the sprues 39 are severed to detach the sections of the support 35 included in each of the coupons. The sprues 39 may be severed close to the support 35, leaving sections of the sprues 39 extending down towards the bottom of the known actuator 1, which may be utilised for making electrical connections to the SMA wires 4₁, ..., 4₈.

Referring in particular to Figures 15A to 15E, the resulting ninth actuator 65 is shown. Figures 15B to 15E have the same geometric relationships to Figure 15A as Figures 1B to 1E to Figure 1A.

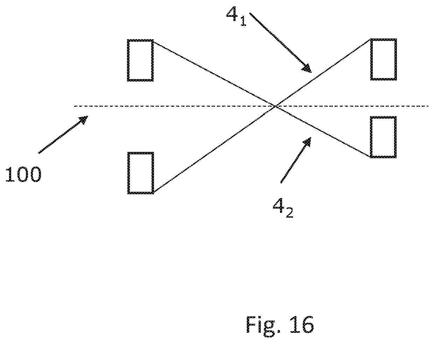

In some embodiments, each of two SMA wires on a first side of the primary axis may be angled differently to each other. With reference to Figure 16, an angle between a first SMA wire 4₁ and a plane 100 perpendicular to the primary axis (i.e. the x-y plane) is different to an angle between a second SMA wire 4₂ and the plane 100. In this way, an asymmetry in e.g. the gearing (the ratio of the distance moved by the moving part 2 in a certain direction to the change in length of the SMA wire 4) can be introduced, which may be advantageous in certain applications. This configuration may also be applied to any of the embodiments disclosed herein.

It will be appreciated that there may be many other variations of the above-described embodiments.

Any of the first to ninth actuators 18, 20, 24, 30, 31, 32, 33, 64, 65 may be incorporated into a camera module 8, in the same way as the known actuator 1. Any of the first to ninth actuators 18, 20, 24, 30, 31, 32, 33, 64, 65 may be used to implement an autofocus function and/or an optical image stabilisation function. Any of the first to ninth actuators 18, 20, 24, 30, 31, 32, 33, 64, 65 may be incorporated into any type of assembly that comprises a moving ('second') part which is movable with respect to a static ('first') part.

The above-described SMA actuator assemblies comprise an SMA wire. The term 'shape memory alloy (SMA) wire' may refer to any element comprising SMA. The SMA wire may have any shape that is suitable for the purposes described herein. The SMA wire may be elongate and may have a round cross section or any other shape cross section. The cross section may vary along the length of the SMA wire. It is also possible that the length of the SMA wire (however defined) may be similar to one or more of its other dimensions. The SMA wire may be pliant or, in other words, flexible. In some examples, when connected in a straight line between two elements, the SMA wire can apply only a tensile force which urges the two elements together. In other examples, the SMA wire may be bent around an element and can apply a force to the element as the SMA wire tends to straighten under tension. The SMA wire may be beam-like or rigid and may be able to apply different (e.g. non-tensile) forces to elements. The SMA wire may or may not include material(s) and/or component(s) that are not SMA. For example, the SMA wire may comprise a core of SMA and a coating of non-SMA material. Unless the context requires otherwise, the term 'SMA wire' may refer to any configuration of SMA wire acting as a single actuating element which, for example, can be individually controlled to produce a force on an element. For example, the SMA wire may comprise two or more portions of SMA wire that are arranged mechanically in parallel and/or in series. In some arrangements, the SMA wire may be part of a larger piece of SMA wire. Such a larger piece of SMA wire might comprise two or more parts that are individually controllable, thereby forming two or more SMA wires.

### Specific example of an actuator

Understanding of the example described hereinbefore may be improved by a non-limiting example of some specific dimensions and angles for an actuator.

In particular, an implementation of the first actuator may be configured such that:
- Each SMA wire 4₁, ..., 4₈ makes an angle of 14 degrees to a plane perpendicular to the primary axis z (i.e. to the *x-y* plane);
- The side *s₁,* ..., *s₄* form a substantially square shape, with side lengths *l₁* = *l₂* = *l₃* = *l₄* = 15 mm.
- The distance perpendicular to the primary axis z for each SMA wire 4₁, ..., 4₈ is 12 mm. In this way, the component of each SMA wire 4₁, ..., 4₈ extending perpendicular to the primary axis z is 80%.
- The distance parallel to the primary axis z for each SMA wire 4₁, ..., 4₈ is 3 mm.

## Claims

1. An actuator (18) comprising:
a first part (3);
a second part (2);
eight shape memory alloy, SMA, wires (4₁,..., 4₈) connected between the first part (3) and the second part (2) so as to enable the second part (2) to be moved relative to the first part (3) with at least two degrees of freedom;
wherein two of the SMA wires (4₁,..., 4₈) are located on each of four sides (s₁,..., s₄), the four sides extending in a loop around a primary axis; and
wherein, on contraction, a first group (4₁, 4₃, 4₅, 4₇) of four of the SMA wires each provide a force on the second part (2) with a component in a first direction along the primary axis, and a second group (4₂, 4₄, 4₆, 4₈)of the other four of the SMA wires each provide a force on the second part (2) with a component in a second, opposite direction along the primary axis;
**characterised in that** each of the eight SMA wires (4₁,..., 4₈) is configured such that a length component of the wires perpendicular to the primary axis is foreshortened relative to a length (l₁,..., l₄) of a corresponding one of the four sides (s₁,..., s₄) such that a resonant frequency for movement of the second part (2) relative to the first part (3) along the primary axis is increased relative to a reference configuration in which the length component of each SMA wire perpendicular to the primary axis were substantially equal to a length of a corresponding side of the first to fourth sides.

2. The actuator according to claims 1, wherein the component of each SMA wire perpendicular to the primary axis is 85% or less than the length of a respective side.

3. The actuator according to any one of claims 1 to 2, wherein each SMA wire makes an acute angle of greater than or equal to 10 degrees to a plane perpendicular to the primary axis.

4. The actuator according to any one of claims 1 to 3, wherein the SMA wires are connected to the first and second parts at connection points, wherein the connection points corresponding to first and second sides are offset towards a first corner joining the first and second sides, and the connection points corresponding to third and fourth sides are offset towards a third corner joining the third and fourth sides.

5. The actuator according to any one of claims 1 to 3, wherein the SMA wires are connected to the first and second parts at connection points, wherein the connection points corresponding to a first side are offset towards a first corner joining the first side to a second side, the connection points corresponding to the second side are offset towards a second corner joining the second side to a third side, the connection points corresponding to the third side are offset towards a third corner joining the third side to a fourth side, and the connection points corresponding to the fourth side are offset towards a fourth corner joining the fourth side to the first side

6. The actuator according to any one of claims 1 to 3, wherein the SMA wires are connected to the first and second parts at connection points, wherein the connection points corresponding to first and second sides are offset towards a first corner joining the first and second sides, the connection points corresponding to a third side are offset towards a third corner joining the third side to a fourth side, and the connection points corresponding to the fourth side are offset towards a fourth corner joining the fourth side to the first side.

7. The actuator according to any one of claims 4 to 6, wherein the offsetting of the connection points corresponding to at least one side defines a corresponding volume which is within a footprint of the first part.

8. The actuator according to claim 7, wherein the volume at least partly receives a portion of the first part and/or one or more terminal connections for making electrical connection to the eight SMA wires.

9. The actuator according to any one of claims 1 to 8, wherein the SMA wires are connected to the first and second parts at connection points;
wherein for each side of the four sides, one set of connection points is separated by a smaller distance along the primary axis than the other set of connection points on that side, so as to move the crossing point of the respective pair of SMA wires towards the centre of that side.

10. The actuator according to claim 9, wherein for each side of the four sides, the set of connection points which is separated by a smaller distance along the primary axis corresponds to the connection points to the second part.

11. The actuator according to any one of claims 1 to 10, wherein each of the SMA wires has a length parallel to the primary axis which is less than or equal to 5 mm.

12. A camera comprising:
the actuator according to any one of claims 1 to 11;
an image sensor;
a lens attached to the second part.

13. Use of an actuator according to any one of claims 1 to 11 to provide an autofocus function and/or an optical image stabilisation function.

## Patentansprüche

1. Aktuator (18), umfassend:
einen ersten Teil (3);
einen zweiten Teil (2);
acht Formgedächntnislegierungsdrähte, SMA-Drähte ( 4₁, ..., 4₈), die zwischen dem ersten Teil (3) und dem zweiten Teil (2) verbunden sind, um es dem zweiten Teil (2) zu ermöglichen, relativ zu dem ersten Teil (3) mit wenigstens zwei Freiheitsgraden bewegt zu werden;
wobei sich zwei der SMA-Drähte ( 4₁, ..., 4₈) auf jeder von vier Seiten (s₁, ..., s₄) befinden, wobei sich die vier Seiten in einer Schleife um eine Hauptachse erstrecken; und
wobei beim Zusammenziehen eine erste Gruppe (4₁, 4₃, 4₅, 4₇) von vier der SMA-Drähte jeweils eine Kraft auf den zweiten Teil (2) mit einer Komponente in einer ersten Richtung entlang der Hauptachse bereitstellt und eine zweite Gruppe (4₂, 4₄, 4₆, 4₈) der anderen vier der SMA-Drähte jeweils eine Kraft auf den zweiten Teil (2) mit einer Komponente in einer zweiten, entgegengesetzten Richtung entlang der Hauptachse bereitstellt; **dadurch gekennzeichnet, dass** jeder der acht SMA-Drähte ( 4₁, ..., 4₈) derart konfiguriert ist, dass eine Längenkomponente der Drähte senkrecht zu der Hauptachse relativ zu einer Länge (l₁, ..., l₄) einer entsprechenden der vier Seiten (s₁, ..., s₄) verkürzt ist, sodass eine Resonanzfrequenz für die Bewegung des zweiten Teils (2) relativ zu dem ersten Teil (3) entlang der Hauptachse relativ zu einer Referenzkonfiguration erhöht wird, in der die Längenkomponente jedes SMA-Drahtes senkrecht zu der Hauptachse im Wesentlichen gleich einer Länge einer entsprechenden Seite der ersten bis vierten Seite war.

2. Aktuator nach Anspruch 1, wobei die Komponente jedes SMA-Drahtes senkrecht zu der Hauptachse 85 % oder weniger als die Länge einer jeweiligen Seite beträgt.

3. Aktuator nach einem der Ansprüche 1 bis 2, wobei jeder SMA-Draht einen spitzen Winkel von mehr als oder gleich 10 Grad zu einer Ebene senkrecht zu der Hauptachse bildet.

4. Aktuator nach einem der Ansprüche 1 bis 3, wobei die SMA-Drähte mit dem ersten und dem zweiten Teil an Verbindungspunkten verbunden sind, wobei die Verbindungspunkte, die der ersten und der zweiten Seite entsprechen, in Richtung einer ersten Ecke, die die erste und die zweite Seite zusammenfügt, versetzt sind und die Verbindungspunkte, die der dritten und der vierten Seite entsprechen, in Richtung einer dritten Ecke, die die dritte und die vierte Seite zusammenfügt, versetzt sind.

5. Aktuator nach einem der Ansprüche 1 bis 3, wobei die SMA-Drähte mit dem ersten und zweiten Teil an Verbindungspunkten verbunden sind, wobei die Verbindungspunkte, die einer ersten Seite entsprechen, in Richtung einer ersten Ecke versetzt sind, die die erste Seite mit einer zweiten Seite zusammenfügt, die Verbindungspunkte, die der zweiten Seite entsprechen, in Richtung einer zweiten Ecke versetzt sind, die die zweite Seite mit einer dritten Seite zusammenfügt, die Verbindungspunkte, die der dritten Seite entsprechen, in Richtung einer dritten Ecke versetzt sind, die die dritte Seite mit einer vierten Seite zusammenfügt, und die Verbindungspunkte, die der vierten Seite entsprechen, in Richtung einer vierten Ecke versetzt sind, die die vierte Seite mit der ersten Seite zusammenfügt.

6. Aktuator nach einem der Ansprüche 1 bis 3, wobei die SMA-Drähte mit dem ersten und dem zweiten Teil an Verbindungspunkten verbunden sind, wobei die Verbindungspunkte, die der ersten und der zweiten Seite entsprechen, in Richtung einer ersten Ecke versetzt sind, die die erste und die zweite Seite zusammenfügt, die Verbindungspunkte, die einer dritten Seite entsprechen, in Richtung einer dritten Ecke versetzt sind, die die dritte Seite mit einer vierten Seite zusammenfügt, und die Verbindungspunkte, die der vierten Seite entsprechen, in Richtung einer vierten Ecke versetzt sind, die die vierte Seite mit der ersten Seite zusammenfügt.

7. Aktuator nach einem der Ansprüche 4 bis 6, wobei der Versatz der Verbindungspunkte, die wenigstens einer Seite entsprechen, ein entsprechendes Volumen definiert, das innerhalb einer Grundfläche des ersten Teils liegt.

8. Aktuator nach Anspruch 7, wobei das Volumen wenigstens teilweise einen Abschnitt des ersten Teils und/oder einen oder mehrere Anschlusspunkte zum Herstellen einer elektrischen Verbindung mit den acht SMA-Drähten aufnimmt.

9. Aktuator nach einem der Ansprüche 1 bis 8, wobei die SMA-Drähte an Verbindungspunkten mit dem ersten und zweiten Teil verbunden sind;
wobei für jede Seite der vier Seiten ein Satz von Verbindungspunkten durch einen kleineren Abstand entlang der Hauptachse getrennt ist als der andere Satz von Verbindungspunkten auf dieser Seite, um die Kreuzungspunkte des jeweiligen Paars SMA-Drähte in Richtung der Mitte dieser Seite zu bewegen.

10. Aktuator nach Anspruch 9, wobei für jede der vier Seiten der Satz von Verbindungspunkten, der durch einen kleineren Abstand entlang der Hauptachse getrennt ist, den Verbindungspunkten zu dem zweiten Teil entspricht.

11. Aktuator nach einem der Ansprüche 1 bis 10, wobei jeder der SMA-Drähte eine Länge parallel zu der Hauptachse aufweist, die kleiner als oder gleich 5 mm ist.

12. Kamera, umfassend:
den Aktuator nach einem der Ansprüche 1 bis 11;
einen Bildsensor;
ein Objektiv, das an dem zweiten Teil befestigt ist.

13. Verwendung eines Aktuators nach einem der Ansprüche 1 bis 11, um eine Autofokusfunktion und/oder eine optische Bildstabilisierungsfunktion bereitzustellen.

## Revendications

1. Actionneur (18) comprenant :
une première partie (3) ;
une deuxième partie (2) ;
huit fils en alliage à mémoire de forme, SMA, (4₁, ..., 4₈) raccordés entre la première partie (3) et la deuxième partie (2) de manière à permettre à la deuxième partie (2) d'être déplacée par rapport à la première partie (3) avec au moins deux degrés de liberté ;
dans lequel deux des fils SMA (4₁, ..., 4₈) sont situés sur chacun de quatre côtés (s₁, ..., s₄), les quatre côtés s'étendant en boucle autour d'un axe principal; et
dans lequel, lors d'une contraction, un premier groupe (4₁, 4₃, 4₅, 4₇) de quatre des fils SMA exercent chacun une force sur la deuxième partie (2) avec une composante dans une première direction le long de l'axe principal, et un deuxième groupe (4₂, 4₄, 4₆, 4₈) des quatre autres fils SMA exercent chacun une force sur la deuxième partie (2) avec une composante dans une deuxième direction opposée le long de l'axe principal;
**caractérisé en ce que** chacun des huit fils SMA (4₁, ..., 4₈) est configuré de sorte qu'une composante de longueur des fils perpendiculaire à l'axe principal est raccourcie par rapport à une longueur (l₁, ..., l₄) d'un côté correspondant parmi les quatre côtés (s₁, ..., s₄) de sorte qu'une fréquence de résonance pour le déplacement de la deuxième partie (2) par rapport à la première partie (3) le long de l'axe principal est augmentée par rapport à une configuration de référence dans laquelle la composante de longueur de chaque fil SMA perpendiculaire à l'axe principal était sensiblement égale à une longueur d'un côté correspondant parmi les premier à quatrième côtés.

2. Actionneur selon la revendication 1, dans lequel la composante de chaque fil SMA perpendiculaire à l'axe principal est inférieure ou égale à 85 % de la longueur d'un côté respectif.

3. Actionneur selon l'une quelconque des revendications 1 et 2, dans lequel chaque fil SMA forme un angle aigu supérieur ou égal à 10 degrés avec un plan perpendiculaire à l'axe principal.

4. Actionneur selon l'une quelconque des revendications 1 à 3, dans lequel les fils SMA sont raccordés aux première et deuxième parties au niveau de points de raccordement, dans lequel les points de raccordement correspondant aux premier et deuxième côtés sont décalés vers un premier coin joignant les premier et deuxième côtés, et les points de raccordement correspondant aux troisième et quatrième côtés sont décalés vers un troisième coin joignant les troisième et quatrième côtés.

5. Actionneur selon l'une quelconque des revendications 1 à 3, dans lequel les fils SMA sont raccordés aux première et deuxième parties au niveau de points de raccordement, dans lequel les points de raccordement correspondant à un premier côté sont décalés vers un premier coin joignant le premier côté à un deuxième côté, les points de raccordement correspondant au deuxième côté sont décalés vers un deuxième coin joignant le deuxième côté à un troisième côté, les points de raccordement correspondant au troisième côté sont décalés vers un troisième coin joignant le troisième côté à un quatrième côté, et les points de raccordement correspondant au quatrième côté sont décalés vers un quatrième coin joignant le quatrième côté au premier côté.

6. Actionneur selon l'une quelconque des revendications 1 à 3, dans lequel les fils SMA sont raccordés aux première et deuxième parties au niveau de points de raccordement, dans lequel les points de raccordement correspondant aux premier et deuxième côtés sont décalés vers un premier coin joignant les premier et deuxième côtés, les points de raccordement correspondant à un troisième côté sont décalés vers un troisième coin joignant le troisième côté à un quatrième côté, et les points de raccordement correspondant au quatrième côté sont décalés vers un quatrième coin joignant le quatrième côté au premier côté.

7. Actionneur selon l'une quelconque des revendications 4 à 6, dans lequel le décalage des points de raccordement correspondant à au moins un côté définit un volume correspondant qui se trouve au sein d'une empreinte de la première partie.

8. Actionneur selon la revendication 7, dans lequel le volume reçoit au moins en partie une portion de la première partie et/ou un ou plusieurs raccordements de bornes pour établir un raccordement électrique aux huit fils SMA.

9. Actionneur selon l'une quelconque des revendications 1 à 8, dans lequel les fils SMA sont raccordés aux première et deuxième parties au niveau de points de raccordement ;
dans lequel pour chaque côté des quatre côtés, un ensemble de points de raccordement est séparé d'une distance plus petite le long de l'axe principal que l'autre ensemble de points de raccordement sur ce côté, de manière à déplacer le point de croisement de la paire respective de fils SMA vers le centre de ce côté.

10. Actionneur selon la revendication 9, dans lequel pour chaque côté des quatre côtés, l'ensemble de points de raccordement qui est séparé d'une distance plus petite le long de l'axe principal correspond aux points de raccordement à la deuxième partie.

11. Actionneur selon l'une quelconque des revendications 1 à 10, dans lequel chacun des fils SMA présente une longueur parallèle à l'axe principal qui est inférieure ou égale à 5 mm.

12. Caméra comprenant :
l'actionneur selon l'une quelconque des revendications 1 à 11 ;
un capteur d'image ;
une lentille fixée à la deuxième partie.

13. Utilisation d'un actionneur selon l'une quelconque des revendications 1 à 11 pour fournir une fonction de mise au point automatique et/ou une fonction de stabilisation d'image optique.
